# EUROPEAN PATENT APPLICATION

(11) **EP 4 850 951 A1**
(43) Date of publication of application: **09.12.2026**
(21) Application number: 25747641.6
(22) Date of filing: 21.01.2025
(51) Int. Cl.: B60K 5/12, B60L 15/20

(54) **ALL-TERRAIN VEHICLE**

(30) Priority: 04.02.2024 CN 202410160439; 22.05.2024 CN 202421132943 U; 22.05.2024 CN 202421137411 U
(71) Applicant: Zhejiang CFMOTO Power Co., Ltd., Hangzhou, Zhejiang 311199 (CN)
(72) Inventor: DUAN, Wenbing, Hangzhou, Zhejiang 311199 (CN); LIANG, Haifeng, Hangzhou, Zhejiang 311199 (CN); LI, Erming, Hangzhou, Zhejiang 311199 (CN); YE, Ping, Hangzhou, Zhejiang 311199 (CN); FANG, Xiangkun, Hangzhou, Zhejiang 311199 (CN)
(74) Representative: Sun, Yiming
(86) International application number: PCT/CN2025/073656
(87) International publication number: WO 2025/162069

(57) **Abstract**

The present disclosure discloses an all-terrain vehicle, comprising: a frame, a plurality of wheels, a power system, and a transmission system. the power system includes an engine, an air filter, and an air intake duct, wherein the engine is connected to the air filter, and the air intake duct is connected to the air filter. the transmission system includes a transmission case, a gear transmission mechanism located in the transmission case, and a continuously variable transmission connected to the gear transmission mechanism in a transmission mode, wherein the gear transmission mechanism is connected to the plurality of wheels in a transmission mode, and the continuously variable transmission is connected to the engine in a transmission mode. the all-terrain vehicle further includes a seat, at least part of which is located forward of a rear accommodating space, the seat including a backrest. the air filter is located below the seat. when viewed along a front-rear direction of the all-terrain vehicle, the engine at least partially overlaps the transmission case, and the engine and the transmission case are both located behind the seat, and the air intake duct at least partially overlaps the backrest. when viewed along a left-right direction of the all-terrain vehicle, the engine at least partially overlaps the continuously variable transmission, and the transmission case at least partially overlaps the continuously variable transmission.

## Description

### RELATED APPLICATION

The present application claims the priority of Chinese Patent Application No. 202410160439.4, filed on February 4, 2024, entitled "All-terrain vehicle", the entire contents of which are incorporated herein by reference.

The present application claims the priority of Chinese Patent Application No. 202421132943.5, filed on May 22, 2024, entitled "All-terrain vehicle", the entire contents of which are incorporated herein by reference.

The present application claims the priority of Chinese Patent Application No. 202421137411.0, filed on May 22, 2024, entitled "All-terrain vehicle", the entire contents of which are incorporated herein by reference.

### FIELD OF THE DISCLOSURE

The present disclosure refers to the field of vehicle engineering, and in particular, to a type of all-terrain vehicle.

### BACKGROUND OF THE DISCLOSURE

An all-terrain vehicle is a four-wheel all-terrain vehicle capable of all-weather and all-terrain driving. The all-terrain vehicle includes a power system, a transmission system, and a travel system. The power system is connected to the travel system by the transmission system, so that the power output by the power system can be transmitted to the travel system through the transmission system.

Since all-terrain vehicles are often driven on rough roads, they are required to have high wading performance. The power system requires external air for combustion, so that the power system can convert thermal energy into kinetic energy to output power. Therefore, the all-terrain vehicle further includes an air intake duct. The arrangement height of the air intake duct is one of the important factors affecting the wading performance of the all-terrain vehicle.

Furthermore, with increasing requirements for structural compactness of all-terrain vehicles, since the power system is a power output device of the all-terrain vehicle and the transmission system is a transmission device thereof, and both the transmission system and the power system have a large volume, it is necessary to reasonably arrange the transmission system and the power system to improve the compactness of the all-terrain vehicle.

### SUMMARY OF THE INVENTION

The embodiments of the present disclosure provide an all-terrain vehicle and a center control system thereof to solve at least one problem existing in the prior art.

In a first aspect, the present embodiment provides an all-terrain vehicle, comprising: a frame, a rear portion of the frame surrounding to form a rear accommodating space; a travel system, at least part of the travel system being located below the frame; a power system, being supported by the frame and at least partially located in the rear accommodating space, the power system comprising an engine, an air filter, and an air intake duct, the engine being connected to the air filter, the air intake duct being connected to the air filter; a transmission system, being at least partially located in the rear accommodating space, the transmission system comprising a transmission case, a gear transmission mechanism located in the transmission case, and a continuously variable transmission connected to the gear transmission mechanism in a transmission mode, the gear transmission mechanism being connected to the travel system in a transmission mode, the continuously variable transmission being connected to the engine; a seat, being at least partially located on a front side of the rear accommodating space, the seat comprising a backrest; wherein the air filter is located below the seat, the engine at least partially overlaps the transmission case when viewed along a front-rear direction of the all-terrain vehicle, the engine and the transmission case are both located behind the seat, the air intake duct at least partially overlaps the backrest, and the engine at least partially overlaps the continuously variable transmission and the transmission case at least partially overlaps the continuously variable transmission when viewed along a left-right direction of the all-terrain vehicle.

In a second aspect, the present embodiment provides an all-terrain vehicle, comprising: a frame, a rear portion of the frame surrounding to form a rear accommodating space; a vehicle body cover being connected to the frame and surrounding to form a cockpit; a travel system at least partially being located below the frame; a power system being supported by the frame and at least partially being located in the rear accommodating space, the power system comprising an engine, an air filter, and an air intake duct, the engine being connected to the air filter, the air intake duct being connected to the air filter; a transmission system being at least partially located in the rear accommodating space, the transmission system comprising a transmission case, a gear transmission mechanism being located in the transmission case, and a continuously variable transmission being connected to the gear transmission mechanism in a transmission mode, the gear transmission mechanism being connected to the travel system in a transmission mode, the continuously variable transmission being connected to the engine in a transmission mode; a seat being at least partially located in front of the rear accommodating space, the seat comprising a backrest; an air conditioning system being at least partially disposed on the frame; an instrument panel being supported by the frame and being located in the cockpit; wherein the air filter is located below the seat, the engine at least partially overlaps the transmission case when viewed along a front-rear direction of the all-terrain vehicle, the engine and the transmission case are both located behind the seat, the air intake duct at least partially overlaps the backrest, and the engine at least partially overlaps the continuously variable transmission and the transmission case at least partially overlaps the continuously variable transmission when viewed along a left-right direction of the all-terrain vehicle; the air conditioning system comprises a housing, a temperature adjustment device, and a blower device, the housing is located below the instrument panel, the housing is provided with an air inlet and an air outlet located above the air inlet, both the air inlet and the air outlet communicating the housing with the cockpit; the temperature adjustment device is configured to heat or cool air, the temperature adjustment device is at least partially disposed in the housing, and along a height direction of the all-terrain vehicle, the temperature adjustment device is located between the air inlet and the air outlet; the blower device is disposed in the housing, and along the height direction of the all-terrain vehicle, the blower device is located between the air outlet and the temperature adjustment device.

In a third aspect, the present embodiment provides an all-terrain vehicle, comprising: a frame, a rear portion of the frame surrounding to form a rear accommodating space; a travel system, the travel system being at least partially located below the frame; a power system, being supported by the frame and at least partially located in the rear accommodating space, the power system comprising an engine, an air filter, and an air intake duct, the engine being connected to the air filter, the air intake duct being connected to the air filter; a transmission system, being at least partially located in the rear accommodating space, the transmission system comprising a transmission case, a gear transmission mechanism located in the transmission case, and a continuously variable transmission connected to the gear transmission mechanism in a transmission mode, the gear transmission mechanism is connected to the travel system, in a transmission mode the continuously variable transmission being connected to the engine in a transmission mode; a seat, being at least partially located on a front side of the rear accommodating space, the seat comprising a backrest; a brake system, comprising a caliper configured to brake the travel system and a drive motor driving the caliper; an electrical system, the electrical system being at least partially disposed on the frame; a cargo box, the cargo box being at least partially disposed on the frame and located at a rear portion of the frame; wherein the air filter is located below the seat, the engine at least partially overlaps the transmission case when viewed along a front-rear direction of the all-terrain vehicle, the engine and the transmission case are both located behind the seat, the air intake duct at least partially overlaps the backrest, and the engine at least partially overlaps the continuously variable transmission and the transmission case at least partially overlaps the continuously variable transmission when viewed along a left-right direction of the all-terrain vehicle; the electrical system comprises an electronic parking brake controller and a parking switch, the parking switch is electrically connected to the electronic parking brake controller, the electronic parking brake controller is electrically connected to the drive motor, the electronic parking brake controller is configured to control, in response to operation of the parking switch, the drive motor to drive the caliper to brake the travel system, the parking switch is located in the cockpit, the electronic parking brake controller is located on the seat or the cargo box.

In a fourth aspect, the present embodiment provides an all-terrain vehicle, comprising: a frame, a rear portion of the frame surrounding to form a rear accommodating space; a travel system, at least part of the travel system being located below the frame; a power system, being supported by the frame and at least partially located in the rear accommodating space, the power system comprising an engine, an air filter, and an air intake duct, the engine being connected to the air filter, the air intake duct being connected to the air filter; a transmission system, being at least partially located in the rear accommodating space, the transmission system comprising a transmission case, a gear transmission mechanism located in the transmission case, and a continuously variable transmission connected to the gear transmission mechanism in a transmission mode, the gear transmission mechanism being connected to the travel system in a transmission mode, the continuously variable transmission being connected to the engine in a transmission mode; a seat, being at least partially located on a front side of the rear accommodating space, the seat comprising a backrest; an electrical system, being electrically connected to the transmission system; wherein the air filter is located below the seat, the engine at least partially overlaps the transmission case when viewed along a front-rear direction of the all-terrain vehicle, the engine and the transmission case are both located behind the seat, the air intake duct at least partially overlaps the backrest, and the engine at least partially overlaps the continuously variable transmission and the transmission case at least partially overlaps the continuously variable transmission when viewed along a left-right direction of the all-terrain vehicle; the electrical system comprises a gear shift switch installed in a driving space, the gear shift switch is electrically connected to the transmission system; wherein the gear shift switch comprises a circuit control board, a connecting housing, a rear housing, and a sealing gasket, the rear housing forming a circuit space, the circuit control board is located in the circuit space, the sealing gasket is attached to the circuit control board and sealing the circuit control board in the circuit space, the connecting housing is connected to the rear housing, the sealing gasket sealing between the connecting housing and the rear housing and is snap-fitted with the rear housing.

### BRIEF DESCRIPTION OF THE DRAWINGS

FIG. 1 is a front left perspective view of an all-terrain vehicle of the present disclosure in accordance with a preferred embodiment of the present invention.
FIG. 2 is a top view of the frame and power system of the all-terrain vehicle of the present disclosure.
FIG. 3 is a partial structural exploded view of the air conditioning system of the all-terrain vehicle of the present disclosure.
FIG. 4 is a partial structural side view of the air conditioning system of the all-terrain vehicle of the present disclosure.
FIG. 5 is a structural schematic view of the air conditioning system and the cooling system of the all-terrain vehicle of the present disclosure.
FIG. 6 is a partial structural schematic view of the front side of the all-terrain vehicle of the present disclosure.
FIG. 7 is a structural schematic view of a cooling module of the all-terrain vehicle of the present disclosure.
FIG. 8 is a partial structural exploded view of an engine of the all-terrain vehicle of the present disclosure.
FIG. 9 is a partial structural cross-sectional view of the engine of the all-terrain vehicle of the present disclosure.
FIG. 10 is a side view of a partial structure of the all-terrain vehicle of the present disclosure.
FIG. 11 is a partial structural schematic view of the left side of the all-terrain vehicle of the present disclosure.
FIG. 12 is a partial structural schematic view of the power system and the transmission system of the all-terrain vehicle of the present disclosure.
FIG. 13 is another side view of a partial structure of the all-terrain vehicle of the present disclosure.
FIG. 14 is a structural schematic view of a generator, a magneto, and a compressor of the all-terrain vehicle of the present disclosure.
FIG. 15 is a top view of the seat and surrounding components of the all-terrain vehicle of the present disclosure.
FIG. 16 is a structural schematic view of the seat, the cargo box, the electrical system, and surrounding components of the all-terrain vehicle of the present disclosure.
FIG. 17 is a structural schematic view of the travel system, the brake system, the cargo box, and the seat of the all-terrain vehicle of the present disclosure.
FIG. 18 is a partial structural schematic view of the vehicle body cover and the electrical system of the all-terrain vehicle of the present disclosure.
FIG. 19 is a structural exploded view of a drive switch of the all-terrain vehicle of the present disclosure.
FIG. 20 is a partial structural schematic view of a center control panel and the electrical system of the all-terrain vehicle of the present disclosure.
FIG. 21 is a structural exploded view of an instrument switch of the all-terrain vehicle of the present disclosure.
FIG. 22 is a partial structural exploded view of the frame of the all-terrain vehicle of the present disclosure.
FIG. 23 is a partial structural exploded view of a top roof, the frame, and a roof bracket of the all-terrain vehicle of the present disclosure.
FIG. 24 is a partial structural exploded view of the top roof, the frame, and the roof bracket of the all-terrain vehicle of the present disclosure from another angle.
FIG. 25 is a partial structural exploded view of a sealing system, the frame, the vehicle body cover, and the top roof of the all-terrain vehicle of the present disclosure.
FIG. 26 is a partial structural exploded view of the frame of the all-terrain vehicle of the present disclosure.
FIG. 27 is a structural exploded view of portion B of FIG. 26 of the all-terrain vehicle of the present disclosure.
FIG. 28 is a structural schematic view of a seat system, an energy system, and the frame of the all-terrain vehicle of the present disclosure.
FIG. 29 is a structural exploded view of the gear shift switch of the all-terrain vehicle of the present disclosure.
FIG. 30 is a partial structural schematic view of the frame, the cargo box, and the electrical system of the all-terrain vehicle of the present disclosure.
FIG. 31 is a partial structural schematic view of the frame, the cargo box, and the electrical system of the all-terrain vehicle of the present disclosure from another angle.
FIG. 32 is a structural exploded view of portion E of FIG. 31 of the all-terrain vehicle of the present disclosure.
FIG. 33 is a connection schematic view of a front swing arm, a front torsion bar, and a front shock absorber according to an embodiment of the present disclosure.
FIG. 34 is a partial schematic view of the front swing arm according to an embodiment of the present disclosure.
FIG. 35 is a connection schematic view of a rear swing arm, a rear torsion bar, and a rear shock absorber according to an embodiment of the present disclosure.
FIG. 36 is a connection schematic view of the front swing arm, the front torsion bar, and the front shock absorber according to an embodiment of the present disclosure.

### DETAIL DESCRIPTION

To enable those skilled in the art to better understand the solution of the present invention, the technical solutions in the specific embodiments of the present disclosure will be clearly and completely described below with reference to the accompanying drawings.

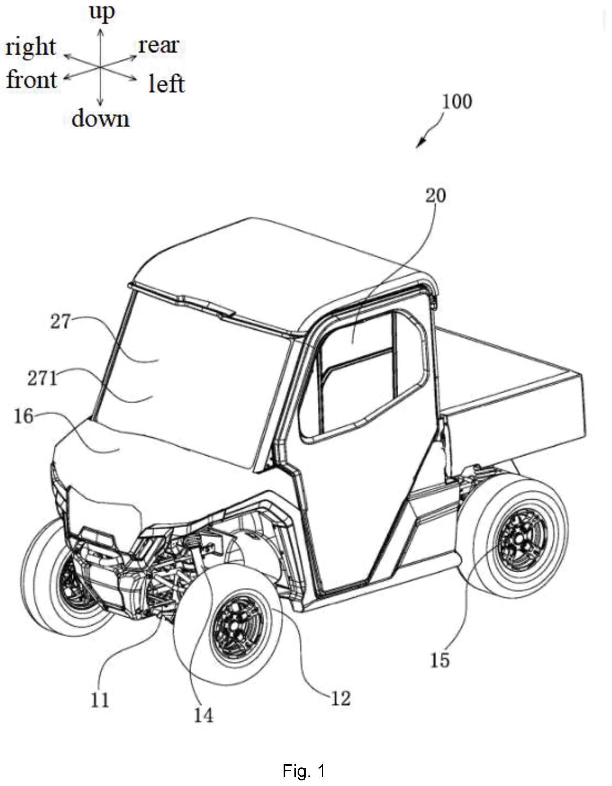

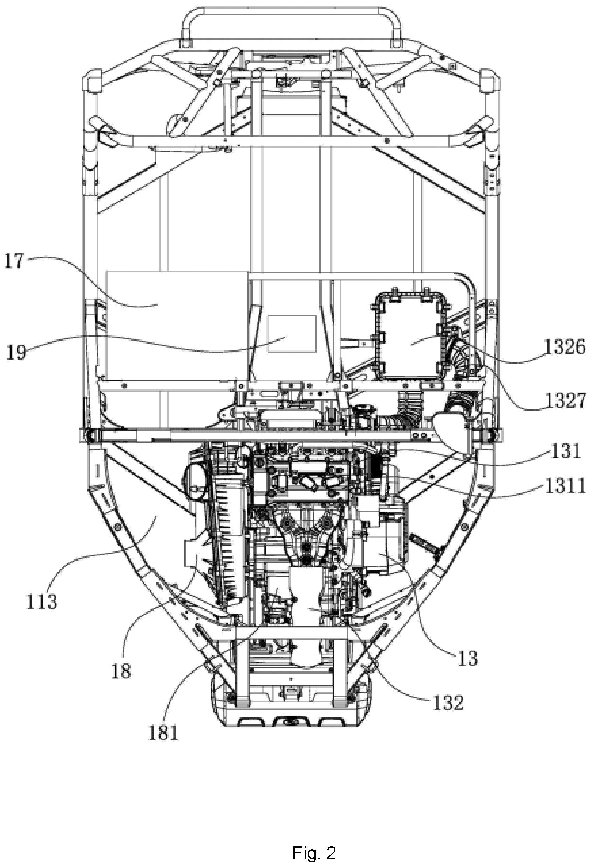

FIG. 1 and FIG. 2 show an all-terrain vehicle 100. The all-terrain vehicle 100 includes a frame 11, a travel system 12, a power system 13, a suspension system 14, a brake system 15, a vehicle body cover 16, a seat 17, a transmission system 18, and an electrical system 19. The frame 11 serves as a basic framework of the all-terrain vehicle 100 and is used to support the travel system 12, the power system 13, the suspension system 14, the brake system 15, the vehicle body cover 16, the seat 17, the transmission system 18, and the electrical system 19. The travel system 12 is connected to the frame 11 by the suspension system 14. The power system 13 is connected to the travel system 12 in a transmission mode to provide driving force for the movement of the travel system 12. The brake system 15 is at least partially located on the travel system 12 to brake the travel system 12. The vehicle body cover 16 is generally made of plastic, and is used to cover and connect to the frame 11 to form exterior parts of the all-terrain vehicle 100. A cockpit 20 is formed after the vehicle body cover 16 is connected to the frame 11. Optional, a middle portion of the frame 11 and the vehicle body cover 16 form the cockpit 20. The seat 17 is located in the cockpit 20 and is used to carry a driver and passenger. The transmission system 18 is connected to the power system 13 in a transmission mode, and the transmission system 18 is also connected to the travel system 12 in a transmission mode, so that the driving force of the power system 13 is transmitted to the travel system 12 through the transmission system 18. The electrical system 19 is at least partially disposed on the frame 11, and the electrical system 19 is used to control electrical components on the all-terrain vehicle 100. To clearly illustrate the technical solution of the present invention, front, rear, left, right, up and down are shown in FIG. 1. In the present disclosure, the length direction of the all-terrain vehicle 100 refers to the front-rear direction of the all-terrain vehicle 100 in FIG. 1, the width direction of the all-terrain vehicle 100 refers to the left-right direction of the all-terrain vehicle 100 in FIG. 1, and the height direction of the all-terrain vehicle 100 refers to the up-down direction of the all-terrain vehicle 100 in FIG. 1. Optionally, the travel system 12 is at least partially located below the frame 11, which facilitates the movement of the travel system 12.

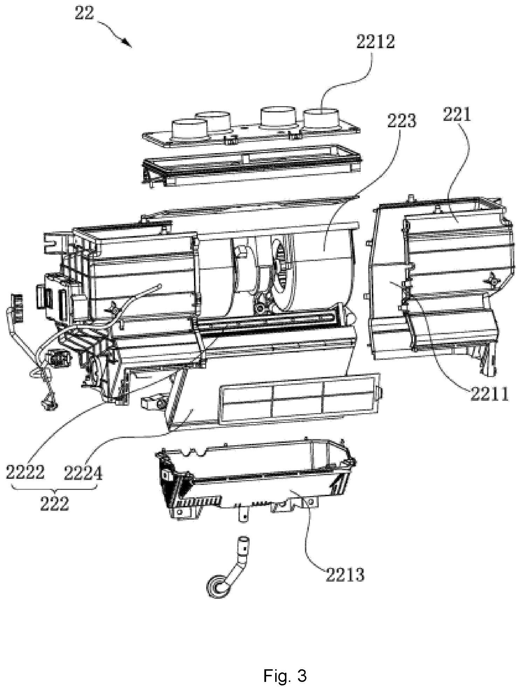

As shown in FIG. 3, as an embodiment, the all-terrain vehicle 100 further includes an air conditioning system 22. The air conditioning system 22 is at least partially disposed on the frame 11 and is used to adjust the temperature in the cockpit 20 to improve the comfort of the all-terrain vehicle 100. Optionally, the air conditioning system 22 includes a housing 221, a temperature adjustment device 222, and a blower device 223. An air conditioning accommodating space 2211 is defined in the housing 221. The housing 221 is provided with an air inlet 2212 and an air outlet 2213 distributed along the height direction of the all-terrain vehicle 100. The air inlet 2212 communicates the air conditioning accommodating space 2211 and the cockpit 20, and the air outlet 2213 communicates the air conditioning accommodating space 2211 with the cockpit 20. The temperature adjustment device 222 is at least partially disposed in the air conditioning accommodating space 2211 and is used to adjust the temperature of the air in the air conditioning accommodating space 2211. The blower device 223 is disposed in the air conditioning accommodating space 2211 and is used to deliver the air from the cockpit 20 into the air conditioning accommodating space 2211 through the air inlet 2212. At the same time, after the air passes through the temperature adjustment device 222, the blower device 223 is also used to deliver the air to the air outlet 2213 and then into the cockpit 20 through the air outlet 2213. Through the above arrangement, air circulation in the cockpit 20 can be achieved, thereby improving the temperature adjustment efficiency of the air conditioning system 22, further improving the working efficiency of the air conditioning system 22, and thus improving the comfort of the all-terrain vehicle 100.

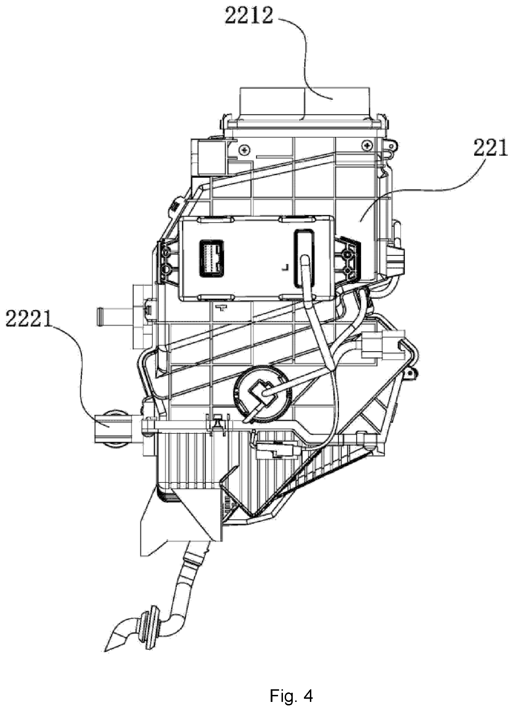

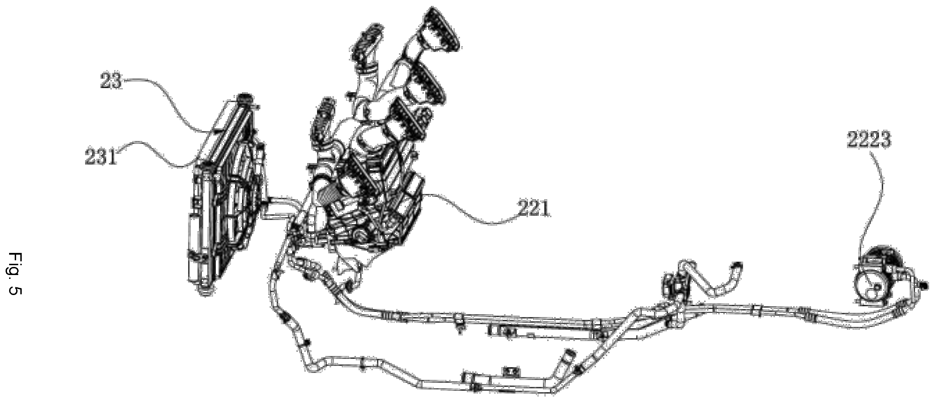

As shown in FIGS. 3, 4, and 5, as an embodiment, the all-terrain vehicle 100 includes a cooling system 23. The cooling system 23 is disposed in the vehicle body cover 16 and connected to the frame 11. The cooling system 23 is used for heat dissipation of the all-terrain vehicle 100. The cooling system 23 includes a cooling module 231. The cooling module 231 is supported by the frame 11 and connected to the air conditioning system 22, thereby achieving heat dissipation of the air conditioning system 22.

Optionally, the temperature adjustment device 222 includes an expansion valve 2221, an evaporator 2222, and a compressor 2223. The expansion valve 2221 is connected to the housing 221 and located outside the air conditioning accommodating space 2211. The evaporator 2222 is located in the air conditioning accommodating space 2211. The evaporator 2222 is connected to the expansion valve 2221 and the compressor 2223, respectively. The cooling module 231 is connected to the compressor 2223 and the expansion valve 2221, respectively, thereby realizing a cooling cycle of the air conditioning system 22, and further realizing a cooling function of the air conditioning system 22.

In the present disclosure, the temperature adjustment device 222 further includes a heating component 2224. The heating component 2224 is disposed in the air conditioning accommodating space 2211. The heating component 2224 is used to heat the air in the air conditioning accommodating space 2211 to achieve a heating function of the air conditioning system 22. Along the height direction of the all-terrain vehicle 100, the evaporator 2222 is located between the air inlet 2212 and the blower device 223, and the heating component 2224 is located between the blower device 223 and the evaporator 2222, so that the air in the air conditioning accommodating space 2211 is heated first and then delivered to the cockpit 20 through the blower device 223. Through the above arrangement, it is beneficial to heat the air in the air conditioning accommodating space 2211, improve the temperature adjustment efficiency of the air conditioning system 22, and at the same time prevent the blower device 223 from directly delivering unheated air into the cockpit 20, facilitating the normal operation of the air conditioning system 22.

As an embodiment, when the power system 13 includes an engine, i.e., when the all-terrain vehicle 100 is a fuel vehicle or a hybrid vehicle, the heating component 2224 is connected to the engine, so that the heat generated by the engine is used as a heat source for the heating component 2224, thereby improving the energy utilization rate of the all-terrain vehicle 100.

It can be understood that when the all-terrain vehicle 100 includes a power battery electrically connected to the power system 13, i.e., when the all-terrain vehicle 100 is an electric vehicle or a hybrid vehicle, the heating component 2224 is electrically connected to the power battery, so that the power battery provides energy for the heating component 2224 to make the heating component 2224 generate heat. In this case, the heating component 2224 may be a PTC heater.

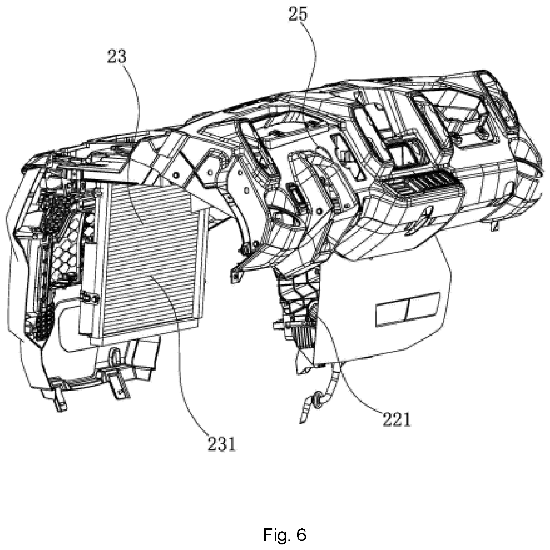

As shown in FIG. 6, in the present disclosure, an instrument panel 25 is supported by the frame 11 and located in the cockpit 20. The instrument panel 25 is used to mount various instruments of the all-terrain vehicle 100 to display operating parameters of the all-terrain vehicle 100 through the instruments. In this embodiment, the housing 221 is located below the instrument panel 25, so that the space below the instrument panel 25 can be used to arrange the air conditioning system 22, thereby improving the space utilization rate below the instrument panel 25 and improving the structural compactness of the air conditioning system 22 and the instrument panel 25.

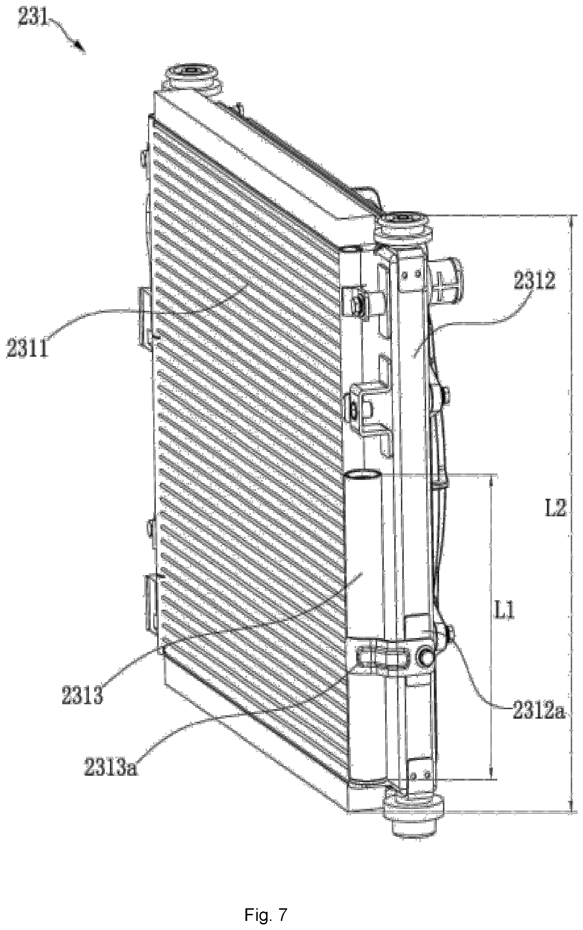

As shown in FIG. 7, as an optional implementation, the cooling module 231 includes a condenser 2311, a radiator 2312, and a receiver drier 2313. The condenser 2311 is located on the front side of the radiator 2312 and connected to the radiator 2312. The receiver drier 2313 is fixed to the radiator 2312 and the condenser 2311. The condenser 2311 is connected to the compressor 2223 and the receiver drier 2313, respectively. The receiver drier 2313 is also connected to the expansion valve 2221. Through the above arrangement, the receiver drier 2313 can dry the cooling medium output from the condenser 2311, so as to avoid corrosion of components of the air conditioning system 22 by water vapor in the cooling cycle, thereby improving the performance of the air conditioning system 22 and increasing the service life of the components of the air conditioning system 22. In addition, the receiver drier 2313 can be integrally arranged on the condenser 2311 and the radiator 2312, making the structure of the cooling module 231 more compact.

Optionally, the receiver drier 2313 is at least partially located on the front side of the radiator 2312 to facilitate welding of the receiver drier 2313 to the condenser 2311. The receiver drier 2313 is also connected to the radiator 2312 by bolts. Through the above arrangement, stable connection between the receiver drier 2313 and the radiator 2312, and between the receiver drier 2313 and the condenser 2311 can be achieved.

In this embodiment, the radiator 2312 at least partially extends away from the radiator 2312 to form a cylindrical portion 2312a. The receiver drier 2313 is provided with a connecting member 2313a. The cylindrical portion 2312a is used to match the structure of the connecting member 2313a, so as to facilitate the connection between the connecting member 2313a and the cylindrical portion 2312a by bolts. Optionally, the cylindrical portion 2312a extends substantially along the width direction of the all-terrain vehicle 100. One end of the connecting member 2313a is welded to the receiver drier 2313, and the other end of the connecting member 2313a extends at least partially rearward, so that the end of the connecting member 2313a away from the receiver drier 2313 can be connected with the cylindrical portion 2312a. Exemplarily, the connecting member 2313a may be a sheet metal part.

As an embodiment, a ratio of a length L1 of the receiver drier 2313 along the height direction of the all-terrain vehicle 100 to a length L2 of the condenser 2311 along the height direction of the all-terrain vehicle 100 ranges from 0.3 to 0.7. Optionally, the ratio of the length L1 of the receiver drier 2313 along the height direction of the all-terrain vehicle 100 to the length L2 of the condenser 2311 along the height direction of the all-terrain vehicle 100 ranges from 0.4 to 0.6. More optionally, the ratio of the length L1 of the receiver drier 2313 along the height direction of the all-terrain vehicle 100 to the length L2 of the condenser 2311 along the height direction of the all-terrain vehicle 100 may also be 0.5. In the present disclosure, the volume of the receiver drier 2313 ranges from 120 ml to 250 ml. Optionally, the volume of the receiver drier 2313 ranges from 150 ml to 210 ml. Optionally, the volume of the receiver drier 2313 may also be 180 ml. Through the above arrangement, the volume of the receiver drier 2313 can be reduced while meeting drying requirements, making the structure of the receiver drier 2313 more compact, thereby improving the structural compactness of the cooling module 231.

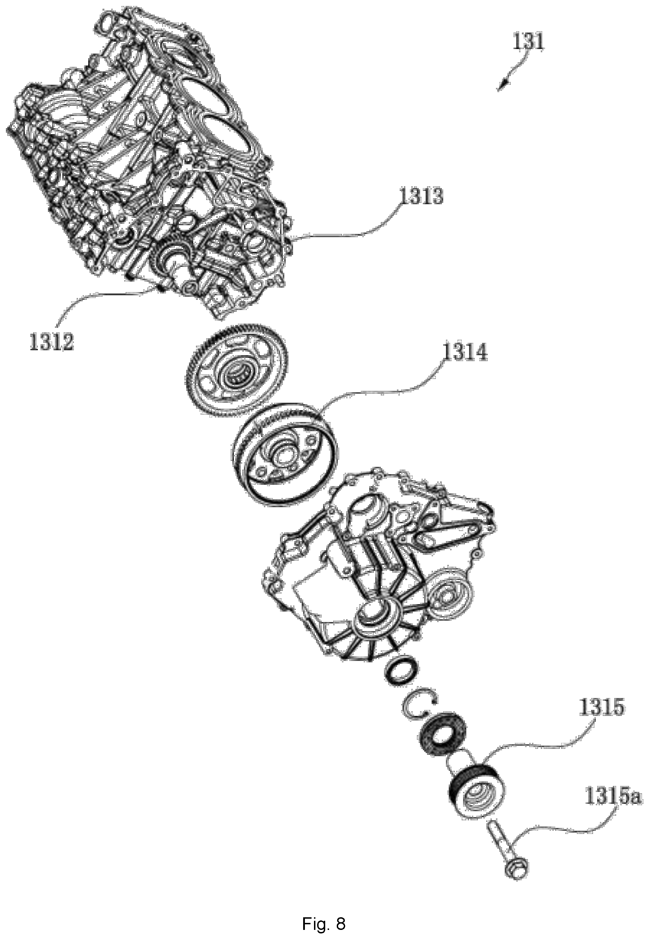

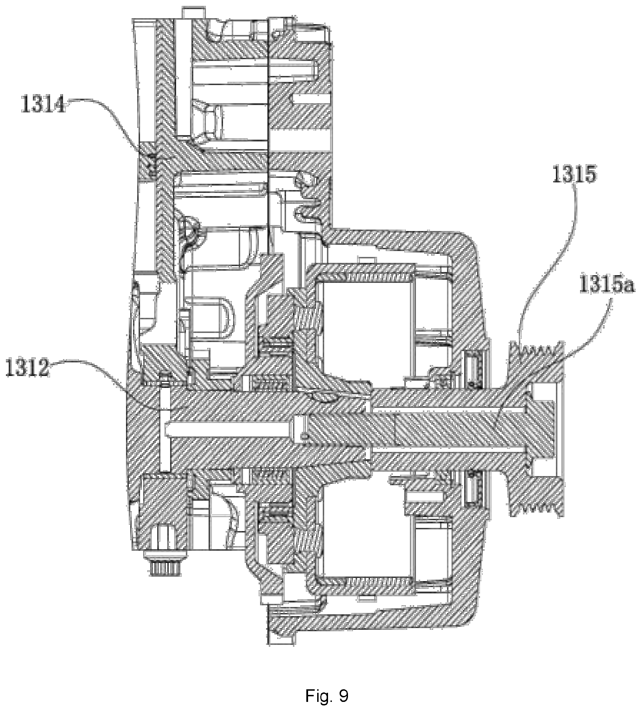

As shown in FIGS. 2, 8, and 9, as an embodiment, the power system 13 includes an engine 131 and an intake and exhaust mechanism 132. The engine 131 is connected to the transmission system 18 in a transmission mode, so that the driving force of the engine 131 can be transmitted to the travel system 12 through the transmission system 18. The engine 131 is connected to the intake and exhaust mechanism 132, and the intake and exhaust mechanism 132 is used for intake and exhaust of the engine 131. Optionally, the engine 131 includes a cylinder head 1311, a crankshaft 1312, a cylinder block (not shown), a crankcase 1313, and a magneto 1314. The cylinder block is respectively connected to the cylinder head 1311 and the crankcase 1313. Along the height direction of the all-terrain vehicle 100, the cylinder block is at least partially located between the cylinder head 1311 and the crankcase 1313. The crankshaft 1312 is at least partially located in the crankcase 1313. The crankshaft 1312 is connected to the magneto 1314 in a transmission mode. More optionally, the crankshaft 1312 is fixedly connected to the magneto 1314, so that the crankshaft 1312 and the magneto 1314 can rotate synchronously. Through the above arrangement, the crankshaft 1312 can drive the magneto 1314 to rotate, so that the magneto 1314 generates electrical energy, thereby enabling the magneto 1314 to supply power to the electrical system 19 and the like.

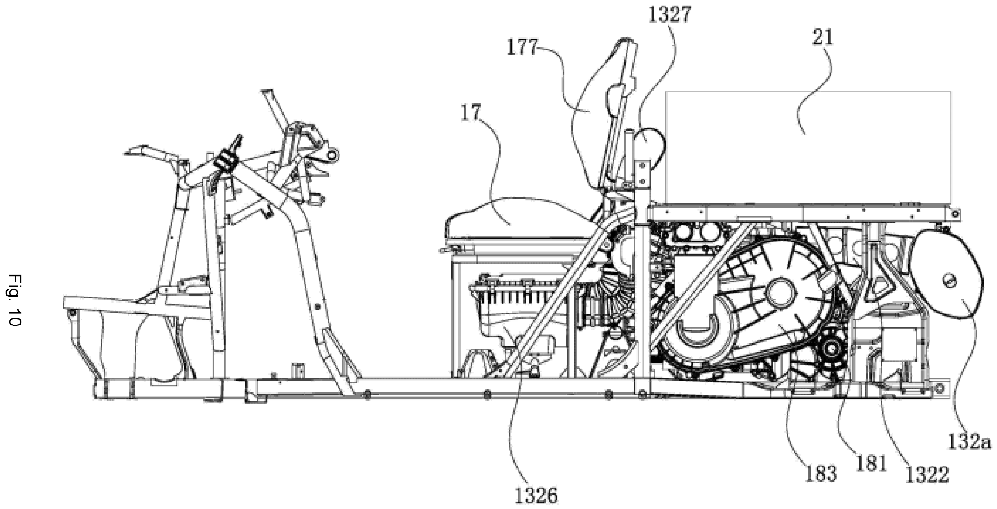

As shown in FIGS. 2 and 10, as an embodiment, a rear portion of the frame 11 surrounds to form a rear accommodating space 113. The power system 13 is at least partially located in the rear accommodating space 113, and the transmission system 18 is also at least partially located in the rear accommodating space 113, so as to improve the space utilization rate of the rear portion of the frame 11. The intake and exhaust mechanism 132 further includes an air filter 1326 and an air intake duct 1327. The engine 131 is connected to the air filter 1326, and the air intake duct 1327 is connected to the air filter 1326, so that air from the environment can enter the air filter 1326 through the air intake duct 1327 and be delivered to the engine 131 after being filtered by the air filter 1326. The transmission system 18 includes a transmission case 181, a gear transmission mechanism (not shown), and a continuously variable transmission 183. Optionally, the gear transmission mechanism is located in the transmission case 181. The gear transmission mechanism is connected to the travel system 12 in a transmission mode. The continuously variable transmission 183 is connected to the gear transmission mechanism in a transmission mode. The continuously variable transmission 183 is connected to the engine 131 in a transmission mode, so that the driving force of the engine 131 can be transmitted to the travel system 12 through the continuously variable transmission 183 and the gear transmission mechanism. The seat 17 is at least partially located on a front side of the rear accommodating space 113. The seat 17 includes a backrest 177 for providing back support for the driver and/or passenger.

Optionally, along the height direction of the all-terrain vehicle 100, the air filter 1326 at least partially overlaps the seat 17, thereby improving the structural compactness and space utilization rate of the air filter 1326 and the seat 17 along the height direction of the all-terrain vehicle 100.

When viewed along the front-rear direction of the all-terrain vehicle 100, the engine 131 at least partially overlaps the transmission case 181, so that the structural compactness of the engine 131 and the transmission case 181 along the length direction of the all-terrain vehicle 100 is relatively high. In addition, when viewed along the front-rear direction of the all-terrain vehicle 100, the air intake duct 1327 at least partially overlaps the backrest 177, thereby allowing the air intake duct 1327 to be arranged at a higher position, which is beneficial to increase the wading depth of the all-terrain vehicle 100, and further prevents external water or other liquids from entering the air filter 1326 and the engine 131 through the air intake duct 1327, thereby improving the service life of the air filter 1326 and the engine 131. Along the width direction of the all-terrain vehicle 100, the engine 131 at least partially overlaps the continuously variable transmission 183, and the transmission case 181 at least partially overlaps the continuously variable transmission 183, thereby improving the structural compactness of the engine 131, the transmission case 181, and the continuously variable transmission 183 along the width direction of the all-terrain vehicle 100.

In the present disclosure, along the length direction of the all-terrain vehicle 100, the engine 131 is located between the transmission case 181 and the seat 17, so that the distance between the transmission case 181 and the travel system 12 is shorter, which facilitates the transmission between the gear transmission mechanism and the travel system 12. Exemplarily, the air filter 1326 is located below the seat 17 to improve the space utilization rate below the seat 17; at the same time, the seat 17 can be removed to facilitate maintenance of the air filter 1326.

As an embodiment, the all-terrain vehicle 100 further includes a cargo box 21. The cargo box 21 is at least partially disposed on the frame 11 and located at a rear portion of the frame 11. Optionally, the cargo box 21 is located above the rear accommodating space 113. The cargo box 21 is used to carry cargo to improve the cargo carrying capacity of the all-terrain vehicle 100. Along the length direction of the all-terrain vehicle 100, the air intake duct 1327 is at least partially located between the cargo box 21 and the backrest 177, so as to improve the space utilization rate between the cargo box 21 and the backrest 177; at the same time, there are few or substantially no components between the cargo box 21 and the backrest 177, thereby preventing the air intake duct 1327 from interfering with other components, facilitating the installation and normal operation of the air intake duct 1327. In this embodiment, along the width direction of the all-terrain vehicle 100, the air intake duct 1327 and the air filter 1326 are located on the same side of the engine 131, which helps to reduce the length of the air intake duct 1327 and improve the efficiency of air entering the air filter 1326.

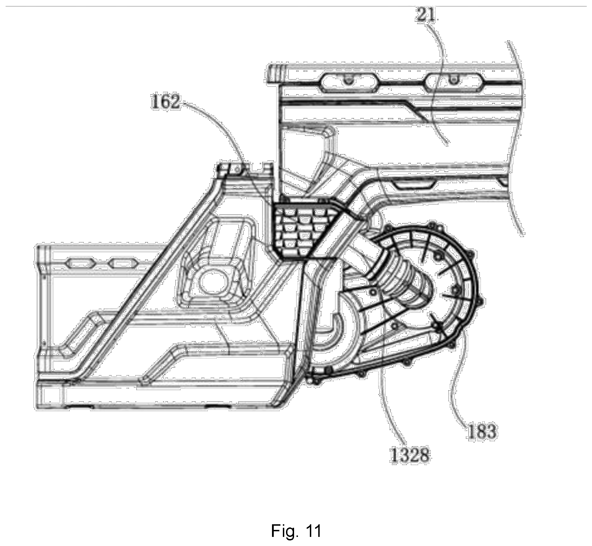

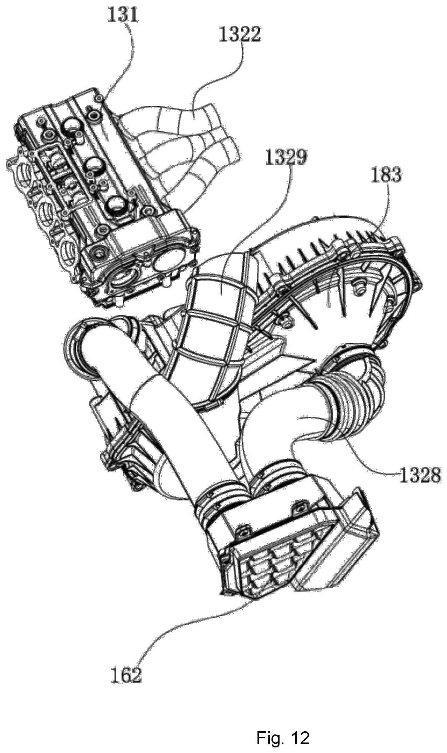

As shown in FIGS. 11 and 12, as an embodiment, the vehicle body cover 16 includes a side intake mechanism 162. The intake and exhaust mechanism 132 includes a wind intake duct 1328. the wind intake duct 1328 respectively communicates the continuously variable transmission 183 and the side intake mechanism 162. The side intake mechanism 162 is exposed to the exterior of the all-terrain vehicle 100 and communicates with the outside. Through the above arrangement, outside air can enter the wind intake duct 1328 through the side intake mechanism 162, and then enter the continuously variable transmission 183 through the wind intake duct 1328 to achieve air intake for the continuously variable transmission 183. In addition, through the above arrangement, the intake position of the continuously variable transmission 183 can be located on the outer surface of the all-terrain vehicle 100, thereby preventing the side intake mechanism 162 from drawing in air with high temperature and high impurities from inside the all-terrain vehicle 100, which is beneficial to cooling the continuously variable transmission 183 and preventing excessive impurities from affecting the service life of the continuously variable transmission 183.

Exemplarily, the intake and exhaust mechanism 132 further includes an outlet pipe 1329. The outlet pipe 1329 communicates with the continuously variable transmission 183. the outlet pipe 1329 is used to discharge air from the continuously variable transmission 183. An outlet opening of the outlet pipe 1329 is oriented toward the engine 131 and the exhaust pipe 1322. Since the temperature of the air in the continuously variable transmission 183 is lower than the temperature of the engine 131 and the exhaust pipe 1322 during normal operation, through the above arrangement, the air from the continuously variable transmission can be delivered to the engine 131 and the exhaust pipe 1322 through the outlet pipe 1329, thereby facilitating cooling of the engine 131 and the exhaust pipe 1322; at the same time, the cooled air from the continuously variable transmission 183 can be fully utilized to improve the resource utilization rate of the all-terrain vehicle 100.

As shown in FIG. 10, as an embodiment, the intake and exhaust mechanism 132 further includes a muffler 132a. The exhaust pipe 1322 respectively connects the muffler 132a and the engine 131, so that exhaust gas from the engine 131 is delivered to the muffler 132a through the exhaust pipe 1322. Along the height direction of the all-terrain vehicle 100, the exhaust pipe 1322 at least partially overlaps the transmission case 181, thereby improving the structural compactness of the exhaust pipe 1322 and the transmission case 181 along the height direction of the all-terrain vehicle 100. Optionally, the exhaust pipe 1322 is located above the transmission case 181, thereby improving the space utilization rate above the transmission case 181, and further improving the structural compactness of the exhaust pipe 1322 and the transmission case 181 along the height direction of the all-terrain vehicle 100. In the present disclosure, the crankshaft 1312 is connected to the continuously variable transmission 183 in a transmission mode. Along the width direction of the all-terrain vehicle 100, the magneto 1314 and the continuously variable transmission 183 are respectively located on two sides of the crankshaft 1312, thereby facilitating the respective driving connection of the magneto 1314 and the continuously variable transmission 183 to the crankshaft 1312, preventing interference between the magneto 1314 and the continuously variable transmission 183, and thus improving the working stability of the magneto 1314 and the continuously variable transmission 183.

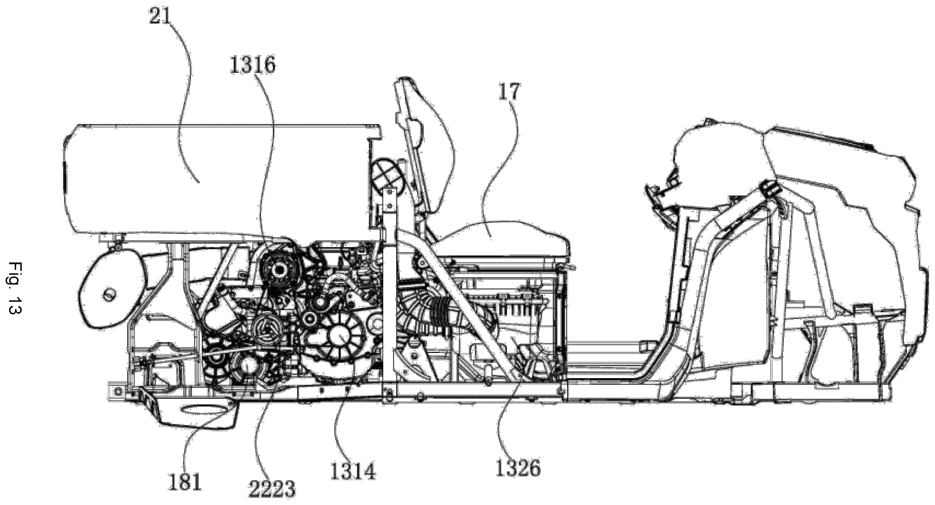

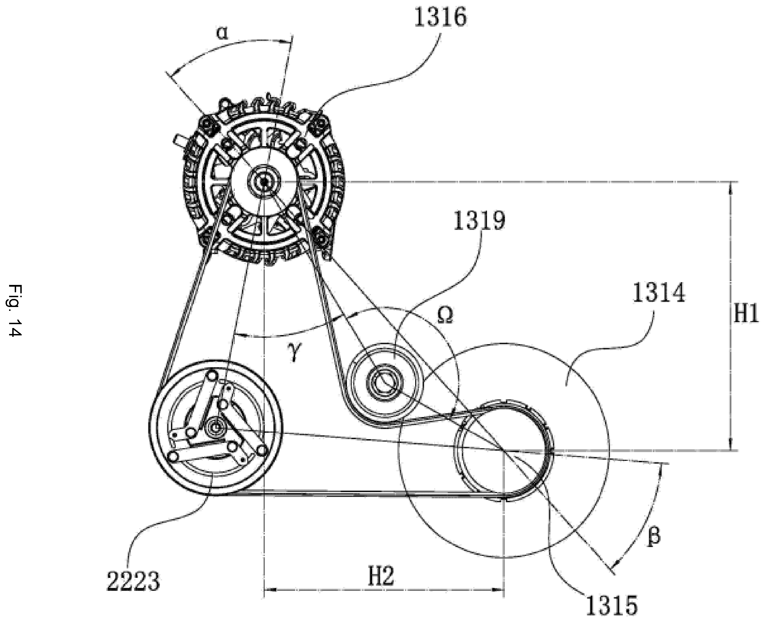

As shown in FIGS. 13 and 14, exemplarily, the engine 131 further includes a generator 1316. The generator 1316 and the magneto 1314 are located on the same side of the crankshaft 1312, so that the crankshaft 1312 is connected to the generator 1316 in a transmission mode by a pulley 1315. Optionally, the generator 1316 is located above the magneto 1314 and the crankshaft 1312, and the generator 1316 is also located behind the magneto 1314 and the crankshaft 1312, so as to facilitate the arrangement of the generator 1316; at the same time, the space utilization rate above and behind the magneto 1314 and the crankcase 1313 can be improved.

Exemplarily, the compressor 2223 is connected to the crankshaft 1312 in a transmission mode, and the compressor 2223 is connected to the generator 1316 in a transmission mode, so that the crankshaft 1312 can simultaneously drive the generator 1316 and the compressor 2223 to work, thereby simplifying the transmission structure between the crankshaft 1312 and the generator 1316, and between the crankshaft 1312 and the compressor 2223, and thus improving the structural compactness of the compressor 2223, the crankshaft 1312, and the generator 1316. Optionally, the compressor 2223, the generator 1316, and the magneto 1314 are located on the same side of the crankshaft 1312, so as to facilitate the transmission between the crankshaft 1312 and the generator 1316, and between the crankshaft 1312 and the magneto 1314. In the present disclosure, the compressor 2223 is located behind the magneto 1314, i.e., the compressor 2223 is located behind the crankshaft 1312, to improve the space utilization rate behind the magneto 1314; the compressor 2223 is also located below the generator 1316, to improve the space utilization rate below the generator 1316. It should be noted that, in the present disclosure, the axis of the magneto 1314 substantially coincides with the rotation center line of the crankshaft 1312.

As an embodiment, the axis of the magneto 1314, the axis of the generator 1316, and the axis of the compressor 2223 each extend substantially along the width direction of the all-terrain vehicle 100. Define a longitudinal plane 101 perpendicular to the width direction of the all-terrain vehicle 100. The projection of the axis of the magneto 1314 onto the longitudinal plane 101 along the width direction is a magneto projection point. The projection of the axis of the generator 1316 onto the longitudinal plane 101 along the width direction is a generator projection point. The projection of the axis of the compressor 2223 onto the longitudinal plane 101 along the width direction is a compressor projection point. A line connecting the magneto projection point and the generator projection point is defined as a first connecting line. A line connecting the generator projection point and the compressor projection point is defined as a second connecting line. An angle α between the first connecting line and the second connecting line ranges from 34° to 74°. Optionally, the angle α between the first connecting line and the second connecting line ranges from 44° to 64°. More optionally, the angle α between the first connecting line and the second connecting line is 54°. Through the above arrangement, it is possible to prevent the distance between the magneto 1314, the generator 1316, and the compressor 2223 along the length direction of the all-terrain vehicle 100 from being too large due to an excessively large angle α between the first connecting line and the second connecting line, thereby improving the structural compactness of the magneto 1314, the generator 1316, and the compressor 2223. In addition, through the above arrangement, it is also possible to prevent interference between the magneto 1314, the generator 1316, and the compressor 2223 due to an excessively small angle α between the first connecting line and the second connecting line, or to prevent interference between the magneto 1314, the generator 1316, and the compressor 2223 and other components due to an excessively small angle α between the first connecting line and the second connecting line, thereby improving the working stability of the magneto 1314, the generator 1316, and the compressor 2223.

Exemplarily, a line connecting the compressor projection point and the magneto projection point is defined as a third connecting line. An angle β between the third connecting line and the first connecting line ranges from 34° to 74°. Optionally, the angle β between the third connecting line and the first connecting line ranges from 44° to 64°. More optionally, the angle β between the third connecting line and the first connecting line is 54°. Through the above arrangement, it is possible to prevent the distance between the magneto 1314, the generator 1316, and the compressor 2223 along the height direction of the all-terrain vehicle 100 from increasing due to an excessively large angle β between the third connecting line and the first connecting line, thereby improving the structural compactness of the magneto 1314, the generator 1316, and the compressor 2223. In addition, through the above arrangement, it is also possible to prevent interference between the magneto 1314, the generator 1316, and the compressor 2223 due to an excessively small angle β between the third connecting line and the first connecting line, or to prevent interference between the magneto 1314, the generator 1316, and the compressor 2223 and other components due to an excessively small angle β between the third connecting line and the first connecting line, thereby improving the working stability of the magneto 1314, the generator 1316, and the compressor 2223.

As an embodiment, a distance along the height direction of the all-terrain vehicle 100 between the magneto projection point and the generator projection point is a motor height H1, and a distance along the length direction of the all-terrain vehicle 100 between the magneto projection point and the generator projection point is a motor length H2. A ratio of the motor height H1 to the motor length H2 ranges from 0.9 to 1.3. Optionally, the ratio of the motor height H1 to the motor length H2 ranges from 1 to 1.2. More optionally, the ratio of the motor height H1 to the motor length H2 is 1.1. Through the above arrangement, it is possible to prevent the distance between the magneto 1314 and the generator 1316 along the height direction of the all-terrain vehicle 100 from being too large due to an excessively large ratio of the motor height H1 to the motor length H2, thereby improving the structural compactness of the magneto 1314 and the generator 1316 along the height direction of the all-terrain vehicle 100. In addition, through the above arrangement, it is possible to prevent the distance between the magneto 1314 and the generator 1316 along the length direction of the all-terrain vehicle 100 from being too large due to an excessively small ratio of the motor height H1 to the motor length H2, thereby improving the structural compactness of the magneto 1314 and the generator 1316 along the length direction of the all-terrain vehicle 100.

As an embodiment, the engine 131 further includes a pulley 1315. The pulley 1315 is fixedly connected to the crankshaft 1312. The pulley 1315, the generator 1316, and the compressor 2223 are connected in a transmission mode by a belt, so that the crankshaft 1312 can simultaneously drive the generator 1316 and the compressor 2223 to move through the pulley 1315, simplifying the transmission structure between the crankshaft 1312 and the generator 1316, and between the crankshaft 1312 and the compressor 2223, thereby improving the structural compactness of the generator 1316, the crankshaft 1312, and the compressor 2223. Optionally, the belt sequentially passes through the pulley 1315, the generator 1316, and the compressor 2223, so that the pulley 1315, the generator 1316, and the compressor 2223 are driven by the same belt.

In the present disclosure, the engine 131 further includes a guide pulley system 1319. The guide pulley system 1319 is connected to the crankcase 1313. The guide pulley system 1319 is used to change the direction of the belt, thereby facilitating the transmission between the pulley 1315, the generator 1316, and the compressor 2223. Optionally, the pulley 1315, the guide pulley system 1319, the generator 1316, and the compressor 2223 are connected in a transmission mode by a belt, so that the crankshaft 1312 can simultaneously drive the guide pulley system 1319, the generator 1316, and the compressor 2223 to move through the pulley 1315, simplifying the transmission structure between the crankshaft 1312 and the generator 1316, between the crankshaft 1312 and the compressor 2223, and between the crankshaft 1312 and the guide pulley system 1319, thereby improving the structural compactness of the generator 1316, the guide pulley system 1319, the crankshaft 1312, and the compressor 2223. Optionally, the belt sequentially passes through the pulley 1315, the guide pulley system 1319, the generator 1316, and the compressor 2223, so that the guide pulley system 1319, the pulley 1315, the generator 1316, and the compressor 2223 are driven by the same belt.

In this embodiment, a portion of the belt between the guide pulley system 1319 and the generator 1316 is defined as a first belt, and a portion of the belt between the generator 1316 and the compressor 2223 is defined as a second belt. An angle γ between an extension direction of the first belt and an extension direction of the second belt ranges from 34° to 74°. Optionally, the angle γ between the extension direction of the first belt and the extension direction of the second belt ranges from 44° to 64°. More optionally, the angle γ between the extension direction of the first belt and the extension direction of the second belt is 54°. Through the above arrangement, it is possible to prevent the contact area between the belt and the generator 1316, and between the belt and the compressor 2223 from being too small due to an excessively large angle γ between the extension direction of the first belt and the extension direction of the second belt, thereby preventing the reliability between the belt and the generator 1316, and between the belt and the compressor 2223 from decreasing, and thus improving the working stability between the belt and the generator 1316, and between the belt and the compressor 2223. In addition, through the above arrangement, it is possible to prevent interference between the generator 1316, the guide pulley system 1319, and the compressor 2223 due to an excessively small angle γ between the extension direction of the first belt and the extension direction of the second belt.

Exemplarily, a portion of the belt between the guide pulley system 1319 and the pulley 1315 is defined as a third belt, and a portion of the belt between the compressor 2223 and the pulley 1315 is defined as a fourth belt. An angle Ω between an extension direction of the third belt and an extension direction of the fourth belt ranges from 141° to 161°. Optionally, the angle Ω between the extension direction of the third belt and the extension direction of the fourth belt ranges from 146° to 155°. More optionally, the angle Ω between the extension direction of the third belt and the extension direction of the fourth belt is 151°. Through the above arrangement, it is possible to prevent the contact area between the belt and the pulley 1315, and between the belt and the compressor 2223 from being too small due to an excessively large angle Ω between the extension direction of the third belt and the extension direction of the fourth belt, thereby preventing the reliability between the belt and the pulley 1315, and between the belt and the compressor 2223 from decreasing, and thus improving the working stability between the belt and the pulley 1315, and between the belt and the compressor 2223. In addition, through the above arrangement, it is possible to prevent interference between the pulley 1315, the guide pulley system 1319, and the compressor 2223 due to an excessively small angle Ω between the extension direction of the third belt and the extension direction of the fourth belt.

As an embodiment, the power system 13 further includes an installation tool for installing the belt. The pulley 1315 is connected to the crankshaft 1312 by a fastener 1315a. The installation tool includes a tool connecting portion and a belt guiding portion. The tool connecting portion is snap-fitted with the fastener 1315a. The belt guiding portion extends substantially along the radial direction of the pulley 1315. One end of the belt guiding portion is connected to the tool connecting portion, and the other end of the belt guiding portion is provided with a slot for receiving the belt. When the installation tool is snap-fitted with the fastener 1315a and the belt is placed in the slot, the rotation of the installation tool drives the crankshaft 1312 and the pulley 1315 to rotate, so that the belt can be snap-fitted onto the pulley 1315, thereby improving the installation efficiency of the belt and reducing the difficulty of installing the belt.

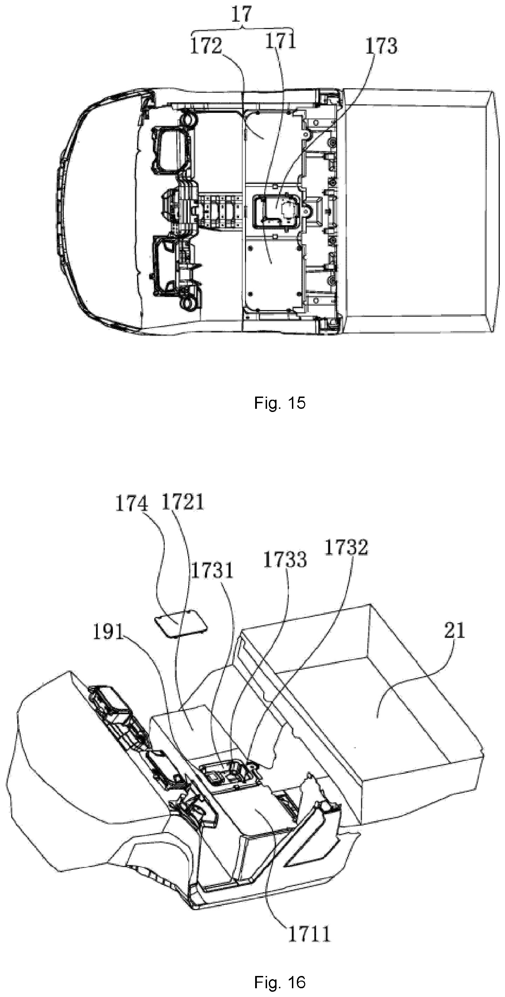

As shown in FIGS. 15, 16, and 17, as an embodiment, the electrical system 19 includes an EPB controller 191 for controlling the brake system 15. The EPB controller 191 is located on the seat 17 or the cargo box 21, thereby facilitating the assembly and disassembly of the EPB controller 191, further improving the maintainability of the EPB controller 191, and facilitating the maintenance of the EPB controller 191.

Optionally, the seat 17 includes a driver seat 171 and a passenger seat 172 disposed along the width direction of the all-terrain vehicle 100. The EPB controller 191 is located between the driver seat 171 and the passenger seat 172. Since the vibration between the driver seat 171 and the passenger seat 172 is small and the waterproof performance is good, the above arrangement can prevent the working instability of the EPB controller 191 due to excessive vibration, or prevent the EPB controller 191 from detaching from its wiring harness due to excessive vibration, thereby improving the working stability of the EPB controller 191; at the same time, it can also prevent external water or other liquids from entering the EPB controller 191, thereby preventing safety hazards such as short circuits in the EPB controller 191.

In this embodiment, the seat 17 further includes an accommodating portion 173. Along the width direction of the all-terrain vehicle 100, the accommodating portion 173 is located between the driver seat 171 and the passenger seat 172. The EPB controller 191 is located in the accommodating portion 173, thereby facilitating the installation and removal of the EPB controller 191. Optionally, the accommodating portion 173 at least partially recesses downward to form an accommodating cavity 1731. The EPB controller 191 is located in the accommodating cavity 1731. The EPB controller 191 is fixedly connected to the bottom of the accommodating cavity 1731, thereby achieving stable connection of the EPB controller 191. Exemplarily, the seat 17 further includes a maintenance cover plate 174. The maintenance cover plate 174 covers the accommodating cavity 1731 and is connected to the accommodating portion 173. The maintenance cover plate 174 and the accommodating portion 173 surround to form a seat accommodating space for accommodating the EPB controller 191, so that the EPB controller 191 can be protected and maintained by installing or removing the maintenance cover plate 174.

In the present disclosure, the accommodating portion 173 is provided with a snap-fit portion 1732 and a fixing portion 1733. The snap-fit portion 1732 and the fixing portion 1733 are arranged around the accommodating cavity 1731. One side of the maintenance cover plate 174 is snap-fitted with the snap-fit portion 1732, and the other side of the maintenance cover plate 174 away from the snap-fit portion 1732 is connected to the fixing portion 1733 by bolts, thereby improving the convenience of assembling and disassembling the maintenance cover plate 174.

As an alternative implementation, the driver seat 171 includes a first cushion 1711, and the passenger seat 172 includes a second cushion 1721. The EPB controller 191 is connected below the first cushion 1711 or below the second cushion 1721. The maintenance and protection of the EPB controller 191 can be achieved simply by assembling or disassembling the first cushion 1711 or the second cushion 1721.

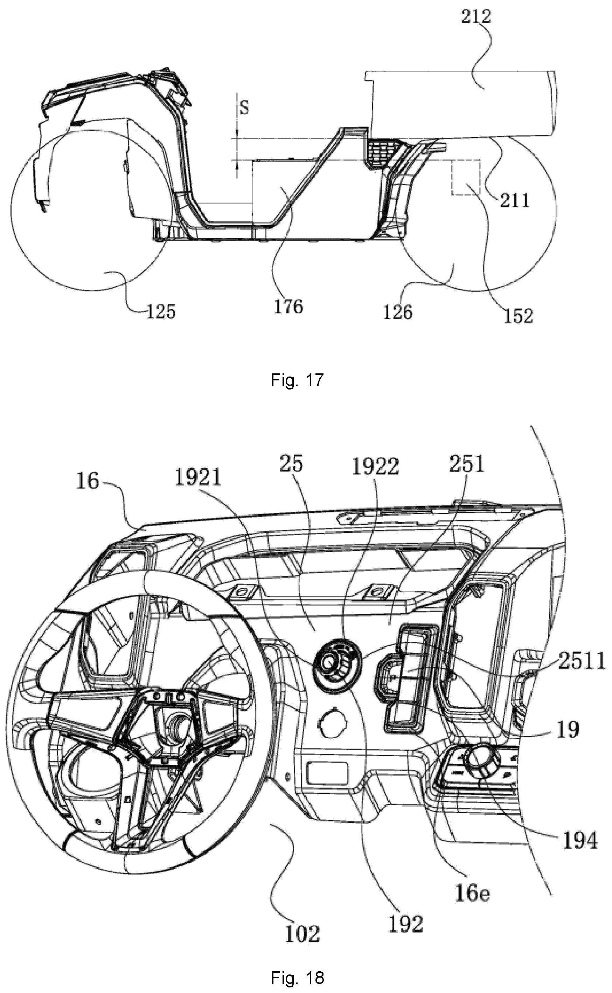

As shown in FIG. 17, as another alternative implementation, a lower side of the seat 17 surrounds to form a layout space 176. The EPB controller 191 is located in the layout space 176, thereby improving the space utilization rate below the seat 17.

As another alternative implementation, the cargo box 21 includes a bottom plate 211 and a plurality of side plates 212. The plurality of side plates 212 is located above the bottom plate 211 and surrounds the bottom plate 211. The EPB controller 191 is connected to the side plates 212, or the EPB controller 191 is connected to a lower side of the bottom plate 211, thereby facilitating the installation and removal of the EPB controller 191, and improving the maintainability of the EPB controller 191.

It should be noted that the travel system 12 includes a front wheel 125 and a rear wheel 126 located at a rear portion of the frame 11. The brake system 15 includes a caliper for braking the rear wheel 126 and a drive motor 152 driving the caliper. The EPB controller 191 is electrically connected to the drive motor 152, so that the EPB controller 191 can drive the caliper through the drive motor 152, thereby achieving braking of the rear wheel 126 by the caliper.

Optionally, a minimum distance S between the EPB controller 191 and the drive motor 152 ranges from 40cm to 300cm. More optionally, the minimum distance S between the EPB controller 191 and the drive motor 152 ranges from 80cm to 200cm. Optionally, the minimum distance S between the EPB controller 191 and the drive motor 152 is 150cm. Through the above arrangement, it is possible to prevent the wiring harness between the EPB controller 191 and the drive motor 152 from being too long due to an excessively large minimum distance S between the EPB controller 191 and the drive motor 152, thereby avoiding the difficulty in arranging the wiring harness due to its excessive length, and at the same time simplifying the wiring harness between the EPB controller 191 and the drive motor 152 to improve the structural compactness between the EPB controller 191 and the drive motor 152. In addition, through the above arrangement, it is possible to prevent the vibration transmitted from the rear wheel 126 to the EPB controller 191 from being too large due to an excessively small minimum distance S between the EPB controller 191 and the drive motor 152, thereby improving the working stability of the EPB controller 191.

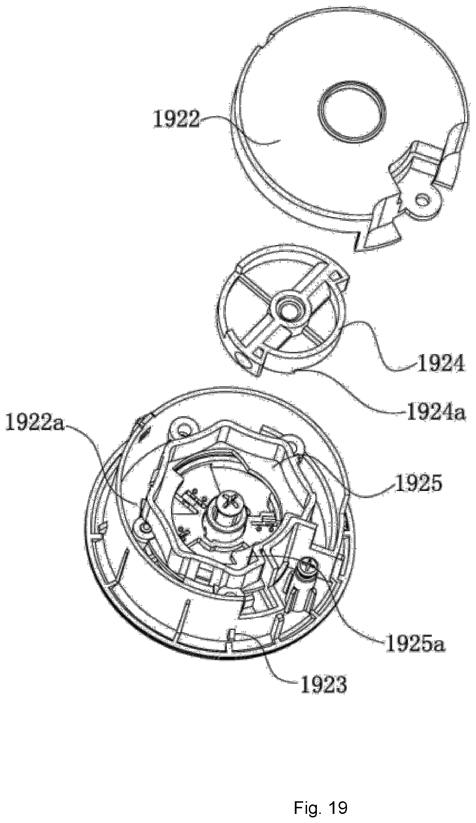

As shown in FIGS. 18 and 19, as an embodiment, the vehicle body cover 16 at least partially surrounds the frame 11 to form a driving space 102. The electrical system 19 includes a drive switch 192 and a vehicle body controller (not shown) located in the driving space 102. The drive switch 192 is electrically connected to the vehicle body controller. The drive switch 192 includes a knob 1921 and a connecting base 1922. The connecting base 1922 is substantially a hollow cylindrical structure. The knob 1921 is at least partially located in the connecting base 1922 and rotatably connected to the connecting base 1922. The knob 1921 includes a first position, a second position, and a third position. Rotating the knob 1921 can switch the knob 1921 between the first position and the second position. Pressing and rotating the knob 1921 can bring the knob 1921 into the third position. Through the above arrangement, it is possible to avoid operational errors of the drive switch 192 caused by directly turning the knob 1921 from the first position to the third position, thereby improving the operability of the drive switch 192. It should be noted that the all-terrain vehicle 100 includes a two-wheel drive state, a four-wheel drive state, and a four-wheel drive lock state. When the knob 1921 is in the first position, the all-terrain vehicle 100 is in the two-wheel drive state. When the knob 1921 is in the second position, the all-terrain vehicle 100 is in the four-wheel drive state. When the knob 1921 is in the third position, the all-terrain vehicle 100 is in the four-wheel drive lock state.

In this embodiment, the connecting base 1922 defines a sliding groove 1922a extending along the axial direction of the connecting base 1922. The knob 1921 is at least partially located in the sliding groove 1922a and rotates around the axis of the connecting base 1922. The knob 1921 can move toward or away from the connecting base 1922 along the axis of the connecting base 1922. Optionally, when the knob 1921 moves in a direction toward the connecting base 1922, the knob 1921 can be directly turned from the first position or the second position to the third position; when the knob 1921 moves in a direction away from the connecting base 1922, the knob 1921 can change from the third position to the second position or the first position. Through the above arrangement, the operation mode of the knob 1921 is simple and the rotation speed is fast, thereby improving the rotation efficiency of the knob 1921.

As an embodiment, the all-terrain vehicle 100 further includes the vehicle body cover 16 and the instrument panel 25 connected to the frame 11. The instrument panel 25 includes a center control panel 251. The center control panel 251 is located in the driving space 102. The drive switch 192 is connected to the center control panel 251. Through the above arrangement, disposing the drive switch 192 on the center control panel 251 facilitates operation by the driver, thereby improving the operational convenience of the all-terrain vehicle 100. Optionally, the center control panel is provided with a drive hole 2511. The drive switch 192 includes a drive snap-fit point 1923 provided on the connecting base 1922. The connecting base 1922 is at least partially located in the drive hole 2511. The drive snap-fit point 1923 at least partially abuts against an edge of the drive hole 2511. Through the above arrangement, the drive switch 192 can be snap-fitted onto the center control panel 251, facilitating the removal and replacement of the drive switch 192, thereby improving the assembly performance of the drive switch 192.

As an embodiment, the drive switch 192 is provided with a drive rotating member 1924 and a drive fixing member 1925. The drive rotating member 1924 is connected to the knob 1921. The drive fixing member 1925 is connected to the connecting base 1922. The knob 1921 drives the drive rotating member 1924 to rotate in the sliding groove 1922a. An end of the drive rotating member 1924 away from the knob 1921 is slidably connected to the drive fixing member 1925. Optionally, the drive rotating member 1924 is at least partially located in the drive fixing member 1925, and a part of a surface of the drive rotating member 1924 contacts a part of a surface of the drive fixing member 1925. The drive rotating member 1924 rotates in the drive fixing member 1925. More optionally, the drive fixing member 1925 is provided with a fixing snap-fit portion 1925a, and the drive rotating member 1924 is provided with a rotating snap-fit portion 1924a. When the knob 1921 is in the second position, the fixing snap-fit portion 1925a abuts against the rotating snap-fit portion 1924a. Through the above arrangement, the fixing snap-fit portion 1925a can limit the rotation of the rotating snap-fit portion 1924a, so that the all-terrain vehicle 100 is in the four-wheel drive state, thereby improving the accuracy of the drive switching process of the all-terrain vehicle 100.

As an embodiment, when the knob 1921 moves toward the connecting base 1922, the drive rotating member 1924 moves toward the drive fixing member 1925, and the rotating snap-fit portion 1924a separates from the fixing snap-fit portion 1925a, so that the knob 1921 continues to drive the drive rotating member 1924 to rotate. Optionally, after the rotating snap-fit portion 1924a and the fixing snap-fit portion 1925a are misaligned, the rotating snap-fit portion 1924a and the fixing snap-fit portion 1925a cannot abut against each other, so that the drive rotating member 1924 can continue to rotate. Through the above arrangement, the all-terrain vehicle 100 requires pressing the knob 1921 to enter the four-wheel drive lock state from the four-wheel drive state, thereby avoiding accidents caused by accidentally touching the drive switch 192, and thus improving the safety performance of the all-terrain vehicle 100.

As an embodiment, the transmission system 31 includes a transfer mechanism (not shown). The transfer mechanism is connected to the vehicle body controller. The travel system includes a front wheel 125 and a rear wheel 126. When the all-terrain vehicle 100 is in the two-wheel drive state, the power system 13 drives the front wheel 125 or the rear wheel 126 to rotate through the transfer mechanism. When the all-terrain vehicle 100 is in the four-wheel drive state, the power system 13 drives the front wheel 125 and the rear wheel 126 to rotate through the transfer mechanism. Through the above arrangement, the operation signal of the drive switch 192 is transmitted to the transfer mechanism, so that the transfer mechanism regulates the travel system 12, thereby improving the cooperation tightness between the drive switch 192 and the transfer mechanism. In addition, the electrical system 19 includes a gear shift switch 194 and a gear shift wiring harness (not shown) located in the driving space 102. The drive switch 192 is arranged close to the gear shift switch 194, thereby improving the structural compactness of the gear shift switch 194, the gear shift wiring harness, and the drive switch 192, and improving the space utilization rate of the all-terrain vehicle 100.

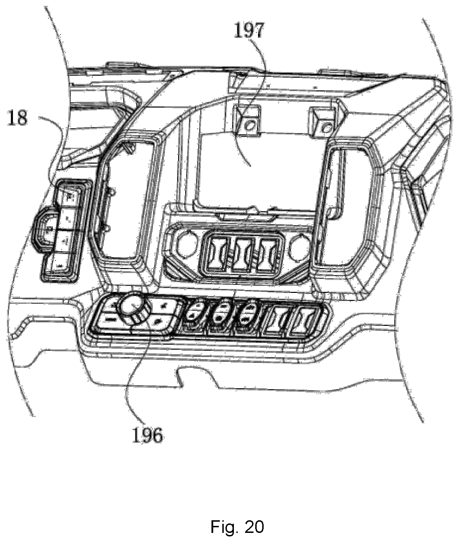

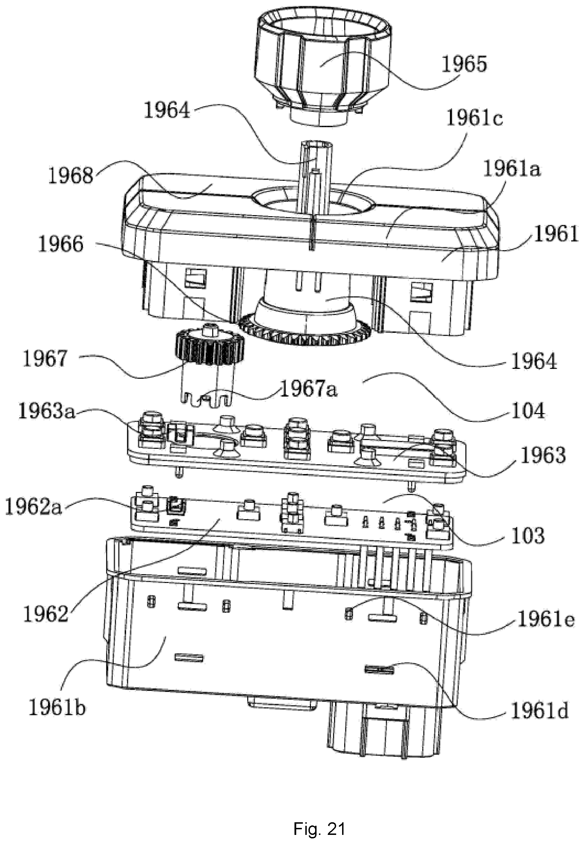

As shown in FIGS. 20 and 21, as an embodiment, the electrical system 19 includes an instrument switch 196 and a display instrument 197 located in the driving space 102. The instrument switch 196 is electrically connected to the display instrument 197. Optionally, the instrument switch 196 is used to control the display instrument 197 to achieve switching between different modules within the display instrument 197. More optionally, the instrument switch 196 includes a housing 1961, a circuit board 1962, and a sealing gasket 1963. The circuit board 1962 and the sealing gasket 1963 are both located in the housing 1961. The sealing gasket 1963 covers the circuit board 1962. A sealing space 103 for sealing the circuit board 1962 is formed between the sealing gasket 1963 and the housing 1961. The circuit board 1962 is located in the sealing space 103. Through the above arrangement, the sealing gasket 1963 is attached to the circuit board 1962, and the outer edge of the sealing gasket 1963 has an interference fit with the inner wall of the housing 1961. The sealing gasket 1963 can prevent the circuit board 1962 from coming into contact with the outside and causing a short circuit, thereby improving the safety and service life of the circuit board 1962, and also improving the sealing performance of the instrument switch 196.

As an embodiment, the housing 1961 includes a first housing 1961a and a second housing 1961b. The first housing 1961a is at least partially snap-fitted into the second housing 1961b, so that the first housing 1961a is connected to the second housing 1961b. Optionally, the first housing 1961a and the second housing 1961b may also be connected by bolts or other means. Through the above arrangement, the connection strength between the first housing 1961a and the second housing 1961b is relatively high, thereby improving the structural stability of the instrument switch 196. At the same time, the first housing 1961a and the second housing 1961b are easy to disassemble, which further improves the assembly of the instrument switch 196.

As an embodiment, an end of the first housing 1961a close to the second housing 1961b abuts against the sealing gasket 1963. An operating space 104 is formed between the second housing 1961b and the sealing gasket 1963. The first housing 1961a is provided with a knob hole 1961c. The knob hole 1961c communicates with the operating space 104. Optionally, the first housing 1961a can limit the movement of the sealing gasket 1963, thereby improving the sealing performance of the sealing space 103, and at the same time isolating the sealing space 103 from the operating space 104, so as to facilitate the utilization and arrangement of the operating space 104, thereby improving the space utilization rate of the instrument switch 196.

Optionally, the instrument switch 196 further includes a transmission rotating shaft 1964 and a rotary knob 1965. The transmission rotating shaft 1964 passes through the knob hole 1961c and is then connected to the rotary knob 1965. The other end of the transmission rotating shaft 1964 is located in the operating space 104. Optionally, the rotary knob 1965 is substantially located outside the operating space 104. The rotary knob 1965 is connected to the first housing 1961a by the transmission rotating shaft 1964 and at least partially abuts against the knob hole 1961c. Through the above arrangement, the assembly performance of the rotary knob 1965 with the first housing 1961a can be improved, thereby improving the assembly efficiency of the instrument switch 196.

As an embodiment, the instrument switch 196 further includes a first gear 1966 and a second gear 1967. The first gear 1966 and the second gear 1967 are both located in the operating space 104. The first gear 1966 is sleeved on the transmission rotating shaft 1964 and fixedly connected to the transmission rotating shaft 1964. The second gear 1967 meshes with the first gear 1966. The rotary knob 1965 drives the first gear 1966 and the second gear 1967 to rotate synchronously through the transmission rotating shaft 1964. Optionally, the circuit board 1962 is provided with a photoelectric switch 1962a. The sealing gasket 1963 is provided with a sealing groove 1963a corresponding to the photoelectric switch 1962a. An end of the second gear 1967 away from the first gear 1966 is provided with an adjustment portion 1967a cooperating with the photoelectric switch 1962a. The adjustment portion 1967a is at least partially located in the sealing groove 1963a. Therefore, the rotary knob 1965 can adjust the state of the photoelectric switch 1962a through the adjustment portion 1967a, so as to facilitate the switching speed of modules in the display instrument 197, thereby improving the operability of the instrument switch 196.

As an embodiment, the instrument switch 196 further includes a plurality of push buttons 1968. The push buttons 1968 are arranged around the rotary knob 1965. Optionally, the push buttons 1968 can adjust different functions of the all-terrain vehicle 100. Arranging the push buttons 1968 around the rotary knob 1965 can improve the structural compactness of the instrument switch 196 and the push buttons 1968. Further, the surfaces of the push buttons 1968 are vulcanized, thereby improving the sealing performance of the push buttons 1968, preventing external liquid such as rainwater from entering the housing 1961 through gaps between the plurality of push buttons 1968, and thus improving the sealing performance of the instrument switch 196. In addition, the second housing 1961b is provided with drainage hole 1961d. The drainage hole 1961d is arranged around the second housing 1961b. The drainage hole 1961d communicates with the operating space 104. When a small amount of external liquid such as rainwater enters the housing 1961, it can be quickly discharged to the outside through the drainage hole 1961d, so as to prevent the sealing gasket 1963 from failing and causing the circuit board 1962 to come into contact with rainwater, thereby further improving the service life of the circuit board 1962.

As an embodiment, the instrument panel 25 includes a center control panel 251. An outer surface of the second housing 1961b is provided with housing snap point 1961e. The second housing 1961b at least partially passes through the center control panel 251. The housing snap point 1961e is snap-fitted on an end surface of the center control panel 251 away from the driving space 102. Through the above arrangement, the assembly and disassembly efficiency of the instrument switch 196 and the center control panel 251 can be improved, thereby improving the assembly efficiency of the all-terrain vehicle 100.

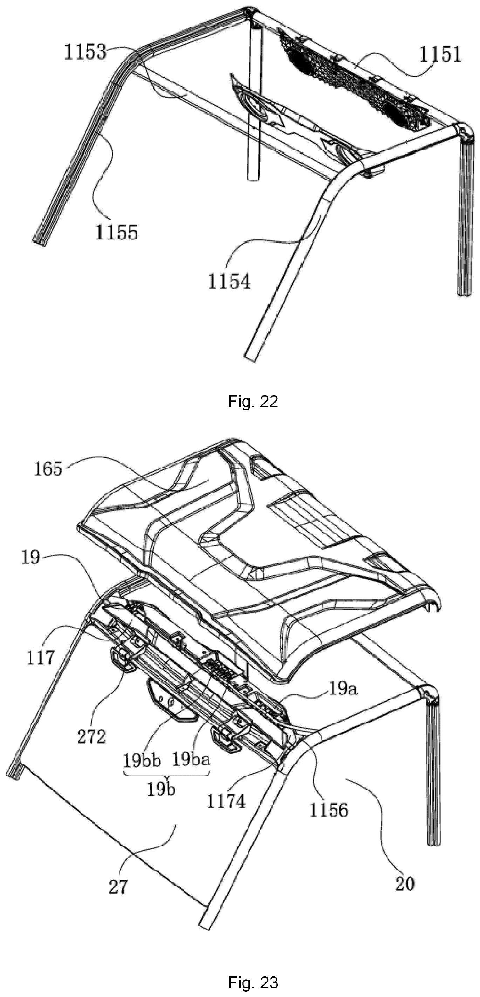

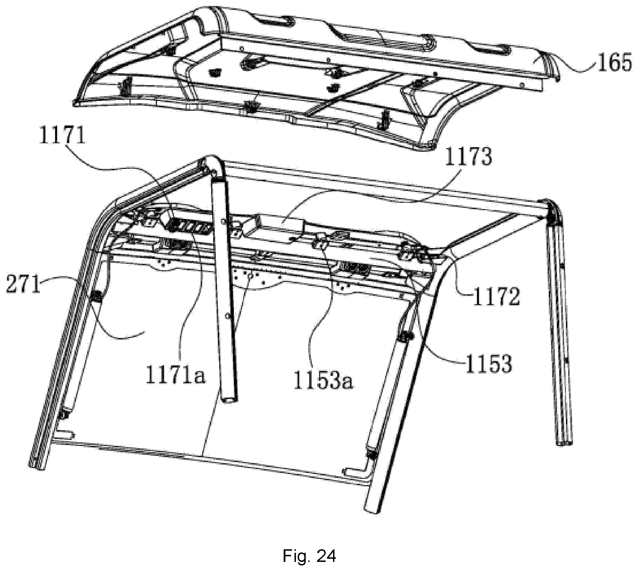

As shown in FIGS. 23 and 24, as an embodiment, the frame 11 includes a roof bracket 117. The roof bracket 117 is made of a plastic material. The electrical system 19 includes a switch assembly 19a. The frame 11 surrounds to form a cockpit 20. The roof bracket 117 at least partially extends toward the cockpit 20 to form a switch box 1171. The switch assembly 19a is disposed in the switch box 1171. Optionally, the switch box 1171 is provided with a plurality of switch snap-fit holes 1171a extending toward the cockpit 20. The switch assembly 19a is at least partially snap-fitted into the switch snap-fit holes 1171a. Through the above arrangement, it is convenient for the driver to operate the switch assembly 19a in the switch box 1171, thereby improving the operability of the all-terrain vehicle 100. It should be noted that a plurality of positions are reserved in the switch box 1171 to facilitate the driver to assemble other switches, or when other switches in the vehicle are damaged, switches can be arranged in the switch box 1171, thereby improving the layout rationality of the switch assembly 19a.

As an embodiment, the electrical system 19 further includes a plurality of electrical components 19b. The roof bracket 117 at least partially extends toward the cockpit 20 to form an electrical component box 1173. The electrical components 19b are disposed in the electrical component box 1173. Optionally, the electrical components 19b include a signal transmitter 19ba and a relay 19bb. The signal transmitter 19ba and the relay 19bb are both located in the electrical component box 1173. The electrical component box 1173 can protect the electrical components 19b to prevent them from being damaged due to exposure, thereby improving the service life of the electrical components 19b. It should be noted that the electrical components 19b may be disposed in the switch box 1171, thereby improving the structural compactness of the switch assembly 19a and the electrical components 19b.

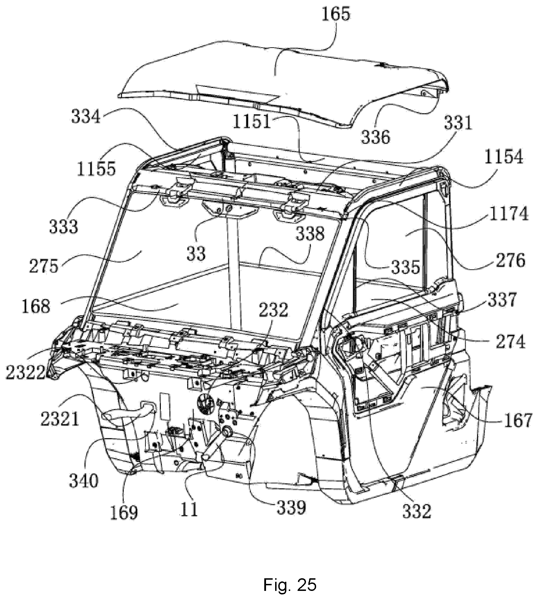

As shown in FIG. 25, as an embodiment, the frame 11 includes a roof bracket 117. The electrical system 19 includes a switch assembly 19a. The frame 11 surrounds to form a cockpit 20. The roof bracket 117 at least partially extends toward the cockpit 20 to form a switch box 1171. The switch assembly 19a is disposed in the switch box 1171. The vehicle body cover 16 further includes a top roof 165. The roof bracket 117 and the top roof 165 are both made of a plastic material. The top roof 165 is fixedly connected to an upper side of the roof bracket 117. Optionally, the all-terrain vehicle 100 further includes a sealing system 33. The sealing system 33 is at least partially attached to the vehicle body cover 16. More optionally, the sealing system 33 includes a roof sealing strip 331. The top roof 165 is fixedly connected to the upper side of the roof bracket 117. The roof sealing strip 331 seals between the roof bracket 117 and the top roof 165. Through the above arrangement, the sealing performance between the roof bracket 117 and the top roof 165 can be improved, thereby improving the sealing performance of the all-terrain vehicle 100.

As an embodiment, the frame 11 includes a left connecting tube 1154 and a right connecting tube 1155. The left connecting tube 1154 is substantially located on the left side of the all-terrain vehicle 100, and the right connecting tube 1155 is substantially located on the right side of the all-terrain vehicle 100. Optionally, the vehicle body cover 16 further includes a left door 167 and a right door 168. The sealing system 33 includes a door sealing strip 332. The door sealing strip 332 seals between the left door 167 and the left connecting tube 1154, and the door sealing strip 332 also seals between the right door 168 and the right connecting tube 1155. Through the above arrangement, the sealing performance between the left door 167 and the left connecting tube 1154 can be improved, and the sealing performance between the right door 168 and the right connecting tube 1155 can also be improved, thereby improving the sealing performance of the all-terrain vehicle 100.

As an embodiment, the all-terrain vehicle 100 includes a windshield system 27. The windshield system 27 is at least partially connected to the frame 11. The windshield system 27 includes a front windshield 271. The front windshield 271 is located on the front side of the roof bracket 117. Optionally, the sealing system 33 includes a windshield sealing strip 333. The windshield sealing strip 333 is located on the front side of the roof bracket 117. An upper side of the front windshield 271 can abut against the windshield sealing strip 333. Through the above arrangement, the sealing performance between the front windshield 271 and the roof bracket 117 can be improved, thereby improving the sealing performance of the all-terrain vehicle 100.

As an embodiment, the top roof 165 is located at upper ends of the left connecting tube 1154 and the right connecting tube 1155. Optionally, the sealing system 33 further includes an edge sealing strip 334. The edge sealing strip 334 seals between the left connecting tube 1154 and the top roof 165, and the edge sealing strip 334 also seals between the right connecting tube 1155 and the top roof 165. Through the above arrangement, the sealing performance between the left connecting tube 1154 and the top roof 165 can be improved, and the sealing performance between the right connecting tube 1155 and the top roof 165 can also be improved.

As an embodiment, the frame 11 includes a front roof bar connecting tube 1153. The left connecting tube 1154 and the right connecting tube 1155 are respectively connected to two ends of the front roof bar connecting tube 1153. The vehicle body cover 16 and the frame 11 further include a roof bracket 117. The roof bracket 117 is connected to the front roof bar connecting tube 1153. Two ends of the roof bracket 117 respectively abut against the left connecting tube 1154 and the right connecting tube 1155. Optionally, the sealing system 33 includes a connecting tube sealing strip 335. The connecting tube sealing strip 335 seals between the left connecting tube 1154 and the roof bracket 117, and the connecting tube sealing strip 335 also seals between the right connecting tube 1155 and the roof bracket 117. Through the above arrangement, the sealing performance between the left connecting tube 1154 and the roof bracket 117 can be improved, and the sealing performance between the right connecting tube 1155 and the roof bracket 117 can also be improved, thereby improving the sealing performance of the all-terrain vehicle 100. It should be noted that the top roof 165 is connected above the front roof bar connecting tube 1153, a rear roof bar connecting tube 1151, the left connecting tube 1154, and the right connecting tube 1155. Through the above arrangement, the top roof 165 can be stably connected to the frame 11, thereby improving the connection strength between the top roof 165 and the frame 11.

As an embodiment, the frame 11 further includes a rear roof bar connecting tube 1151. The left connecting tube 1154 and the right connecting tube 1155 are respectively connected to two ends of the rear roof bar connecting tube 1151. The rear roof bar connecting tube 1151 is located below the top roof 165. Optionally, the sealing system 33 further includes a rear sealing strip 336. The rear sealing strip 336 seals between the rear roof bar connecting tube 1151 and the top roof 165. Through the above arrangement, the sealing performance between the rear roof bar connecting tube 1151 and the top roof 165 can be improved, thereby improving the sealing performance of the all-terrain vehicle 100.

As an embodiment, the windshield system 27 further includes a left windshield 274 and a right windshield 275. The left windshield 274 is connected to the left door 167, and the right windshield 275 is connected to the right door 168. Optionally, the sealing system 33 includes a door glass sealing strip 337. The door glass sealing strip 337 seals between the left windshield 274 and the left door 167, and the door glass sealing strip 337 seals between the right windshield 275 and the right door 168. Through the above arrangement, the sealing performance between the left windshield 274 and the left door 167 can be improved, and the sealing performance between the right windshield 275 and the right door 168 can also be improved.

As an embodiment, the windshield system 27 further includes a rear windshield 276. The rear windshield 276 is connected to the rear roof bar connecting tube 1151. Optionally, the sealing system 33 includes a rear glass sealing strip 338. The rear glass sealing strip 338 seals between the rear windshield 276 and the rear roof bar connecting tube 1151. Through the above arrangement, the sealing performance between the rear windshield 276 and the rear roof bar connecting tube 1151 can be improved.

As an embodiment, the vehicle body cover 16 includes a front fender 169. The front fender 169 is connected to the frame 11. Optionally, the sealing system 33 includes a front fender sealing strip 339, and the front fender sealing strip 339 seals between the front fender 169 and the frame 11. Through the above arrangement, the sealing performance between the front fender 169 and the frame 11 can be improved.

As an embodiment, the cooling system 23 includes a heat dissipation air conditioner 232. The heat dissipation air conditioner 232 is at least partially located behind the front fender 169. Optionally, the heat dissipation air conditioner 232 includes a condenser tube 2321 and a drain tube 2322 that pass through the front fender 169. The sealing system 33 includes a tube sealing ring 340. The tube sealing ring 340 seals between the condenser tube 2321 and the front fender 169, and the tube sealing ring 340 also seals between the drain tube 2322 and the front fender 169. Through the above arrangement, it is beneficial to improve the sealing performance between the condenser tube 2321 and the front fender 169, thereby improving the sealing performance between the drain tube 2322 and the front fender 169, and further improving the sealing performance of the all-terrain vehicle 100.

As shown in FIG. 24, as an embodiment, the roof bracket 117 is connected to the front roof bar connecting tube 1153. The top roof 165 is connected to the front roof bar connecting tube 1153 by the roof bracket 117. Through the above arrangement, the connection strength between the roof bracket 117 and the front roof bar connecting tube 1153 is improved, and at the same time, the structures of the roof bracket 117, the front roof bar connecting tube 1153, and the top roof 165 are more compact, thereby improving the structural compactness of the all-terrain vehicle 100.

Further, the front roof bar connecting tube 1153 is provided with a plurality of roof bar connecting portions 1153a distributed along the width direction of the all-terrain vehicle 100. A lower side of the roof bracket 117 is provided with bracket connecting portions 1172 corresponding to the roof bar connecting portions 1153a. The roof bar connecting portions 1153a are detachably connected to the bracket connecting portions 1172 by fasteners. Through the above arrangement, the assembly speed of the roof bar connecting portions 1153a and the bracket connecting portions 1172 can be increased, thereby improving the assembly efficiency of the front roof bar connecting tube 1153 and the roof bracket 117.

As shown in FIGS. 22 and 23, as an embodiment, the roof bracket 117 is provided with a rotational connecting member 272. The front windshield 271 is connected to the rotational connecting member 272, so that the front windshield 271 is rotatably connected to the roof bracket 117 by the rotational connecting member 272. Optionally, the rotational connecting member 272 is connected to the roof bracket 117 by fasteners such as bolts. The rotational connecting member 272 itself has a rotation function. An end of the rotational connecting member 272 away from the roof bracket 117 can be connected to the front windshield 271, thereby facilitating the rotation of the front windshield 271. Through the above arrangement, the front windshield 271 is stably connected to the roof bracket 117 by the rotational connecting member 272, thereby improving the connection strength of the front windshield 271, the rotational connecting member 272, and the roof bracket 117. At the same time, the rotational connecting member 272 has a relatively large rotation angle, which can further increase the rotation range of the front windshield 271, thereby improving the adjustment range of the front windshield 271.

As an embodiment, the frame 11 includes a first reinforcing plate 1156. Two ends of the roof bracket 117 along the width direction of the all-terrain vehicle 100 are each provided with a relief portion 1174. The relief portion 1174 at least partially abuts above the first reinforcing plate 1156. Optionally, the first reinforcing plate 1156 can improve the structural strength of the frame 11. Since both the first reinforcing plate 1156 and the roof bracket 117 are connected to the front roof bar connecting tube 1153, in order to avoid interference between the first reinforcing plate 1156 and the roof bracket 117, the roof bracket 117 is provided with the relief portion 1174 to avoid interference, thereby improving the assembly speed of the first reinforcing plate 1156, the roof bracket 117, and the front roof bar connecting tube 1153, and thus improving the assembly efficiency of the all-terrain vehicle 100.

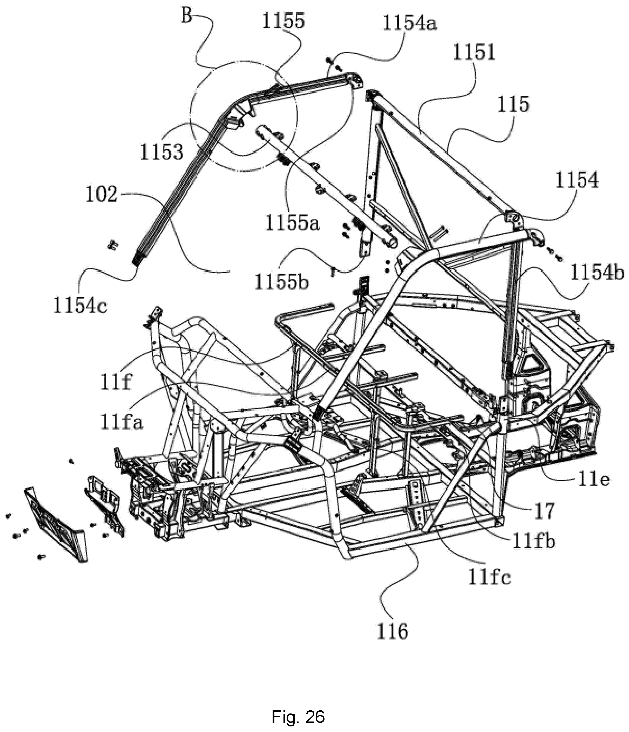

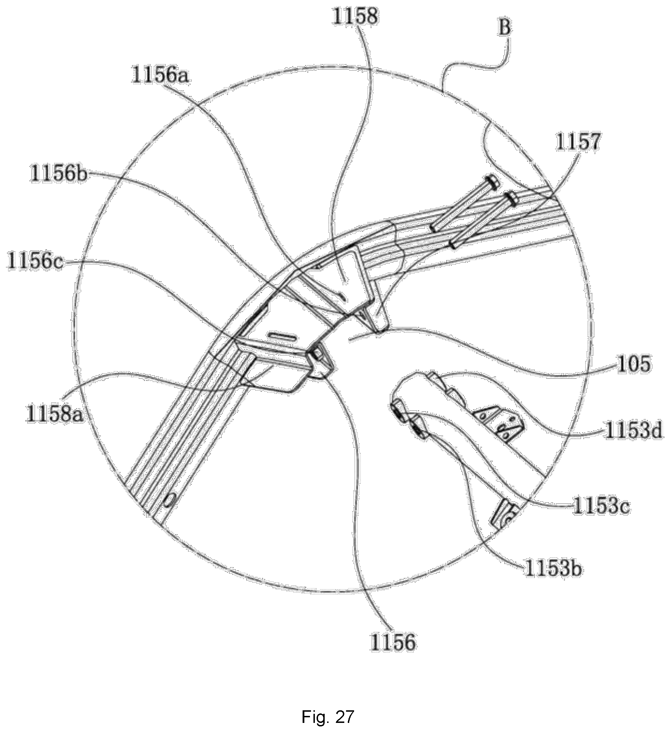

As shown in FIGS. 26 and 27, as an embodiment, the frame 11 includes an upper connecting frame 115 and a lower support frame 116. The upper connecting frame 115 is detachably connected to an upper side of the lower support frame 116. The vehicle body cover 16 is at least partially connected to the upper connecting frame 115. Optionally, the upper connecting frame 115 includes a front roof bar connecting tube 1153, a left connecting tube 1154, and a right connecting tube 1155. The left connecting tube 1154 and the right connecting tube 1155 are respectively connected to two ends of the front roof bar connecting tube 1153. The left connecting tube 1154 and the right connecting tube 1155 are each provided with a first reinforcing plate 1156, a second reinforcing plate 1157, and a third reinforcing plate 1158. The first reinforcing plate 1156, the second reinforcing plate 1157, and the third reinforcing plate 1158 surround to form a connecting space 105. The front roof bar connecting tube 1153 is at least partially located in the connecting space 105. The front roof bar connecting tube 1153 is connected to the left connecting tube 1154 and the right connecting tube 1155 by the first reinforcing plate 1156, the second reinforcing plate 1157, and the third reinforcing plate 1158. Through the above arrangement, the connection strength of the front roof bar connecting tube 1153, the left connecting tube 1154, and the right connecting tube 1155 can be improved, thereby improving the structural strength of the frame 11.

As an embodiment, two ends of the front roof bar connecting tube 1153 are each provided with a first connecting hole 1153b and a second connecting hole 1153c. The first connecting hole 1153b and the second connecting hole 1153c are disposed along the axial direction of the front roof bar connecting tube 1153. Optionally, the first reinforcing plate 1156 and the second reinforcing plate 1157 are each provided with a third connecting hole 1156a corresponding to the first connecting hole 1153b. The first reinforcing plate 1156 and the second reinforcing plate 1157 are each provided with a fourth connecting hole 1156b corresponding to the second connecting hole 1153c. The first connecting hole 1153b and the third connecting hole 1156a are connected by a fastener, and the second connecting hole 1153c and the fourth connecting hole 1156b are also connected by a fastener, so that the front roof bar connecting tube 1153 is connected to the first reinforcing plate 1156 and the second reinforcing plate 1157. Through the above arrangement, the front roof bar connecting tube 1153 is connected to the first reinforcing plate 1156 and the second reinforcing plate 1157 by a plurality of fasteners, thereby improving the connection strength of the front roof bar connecting tube 1153, the first reinforcing plate 1156, and the second reinforcing plate 1157. It should be noted that a bushing 1153d is disposed in each of the first connecting hole 1153b and the second connecting hole 1153c. The fastener passes through the bushing 1153d and is then connected to the first reinforcing plate 1156 and the second reinforcing plate 1157. The bushing 1153d can improve the structural strength of the front roof bar connecting tube 1153, thereby also improving the connection stability of the front roof bar connecting tube 1153, the first reinforcing plate 1156, and the second reinforcing plate 1157.

As an embodiment, the third reinforcing plate 1158 is simultaneously connected to the first reinforcing plate 1156 and the second reinforcing plate 1157. An end of the third reinforcing plate 1158 away from the second reinforcing plate 1157 at least partially extends toward a lower side of the all-terrain vehicle 100 to form a reinforcing portion 1158a. When viewed along the front-rear direction of the all-terrain vehicle 100, the reinforcing portion 1158a at least partially overlaps with the first reinforcing plate 1156 and the second reinforcing plate 1157. Through the above arrangement, the structures of the first reinforcing plate 1156, the second reinforcing plate 1157, and the third reinforcing plate 1158 can be made more compact, thereby improving the structural compactness of the first reinforcing plate 1156, the second reinforcing plate 1157, and the third reinforcing plate 1158, and further improving the space utilization rate of the all-terrain vehicle 100.

As an embodiment, an end of the first reinforcing plate 1156 away from the second reinforcing plate 1157 is disposed close to the reinforcing portion 1158a. The first reinforcing plate 1156 is provided with a connecting portion 1156c. The connecting portion 1156c is located between the first reinforcing plate 1156 and the reinforcing portion 1158a and is fixedly connected to the first reinforcing plate 1156. The fastener passes through the bushing 1153d and is detachably connected to the connecting portion 1156c. Through the above arrangement, the connecting portion 1156c is disposed in a narrow space between the reinforcing portion 1158a and the first reinforcing plate 1156, thereby improving the structural compactness of the connecting portion 1156c, the reinforcing portion 1158a, and the first reinforcing plate 1156. At the same time, it is beneficial to the assembly speed of the fastener and the connecting portion 1156c, thereby improving the assembly efficiency of the all-terrain vehicle 100.

As an embodiment, each of the left connecting tube 1154 and the right connecting tube 1155 includes a longitudinal bracket 1154a extending substantially along the length direction of the all-terrain vehicle 100 and a pillar bracket 1154b distributed along the height direction of the all-terrain vehicle 100. A front end of the longitudinal bracket 1154a and a lower end of the pillar bracket 1154b are both connected to the lower support frame 116. A rear end of the longitudinal bracket 1154a and an upper end of the pillar bracket 1154b are both connected. Further, the front end of the longitudinal bracket 1154a is provided with a front side mounting hole 1154c extending substantially along the height direction of the all-terrain vehicle 100. The rear end of the longitudinal bracket 1154a is provided with a rear side mounting hole 1154d extending substantially along the width direction of the all-terrain vehicle 100. An axis of the front side mounting hole 1154c is perpendicular to an axis of the rear side mounting hole 1154d. Through the above arrangement, the connection strength of the longitudinal bracket 1154a and the pillar bracket 1154b can be improved, thereby preventing deformation of the longitudinal bracket 1154a and the pillar bracket 1154b, and thus improving the structural stability of the all-terrain vehicle 100.

As an embodiment, the upper end of the pillar bracket 1154b is provided with an upper side mounting hole 1155a, and the lower end of the pillar bracket 1154b is provided with a lower side mounting hole 1155b. Axes of the upper side mounting hole 1155a and the lower side mounting hole 1155b extend substantially along the width direction of the all-terrain vehicle 100. Optionally, the upper connecting frame 115 further includes a rear roof bar connecting tube 1151. The rear roof bar connecting tube 1151 extends along the width direction of the all-terrain vehicle 100 and is connected to the upper side of the pillar bracket 1154b. The upper side mounting hole 1155a and the rear side mounting hole 1154d are disposed close to two ends of the rear roof bar connecting tube 1151. Through the above arrangement, the disassembly or assembly efficiency of the pillar bracket 1154b, the rear roof bar connecting tube 1151, and the longitudinal bracket 1154a can be improved, thereby improving the assembly efficiency of the all-terrain vehicle 100.

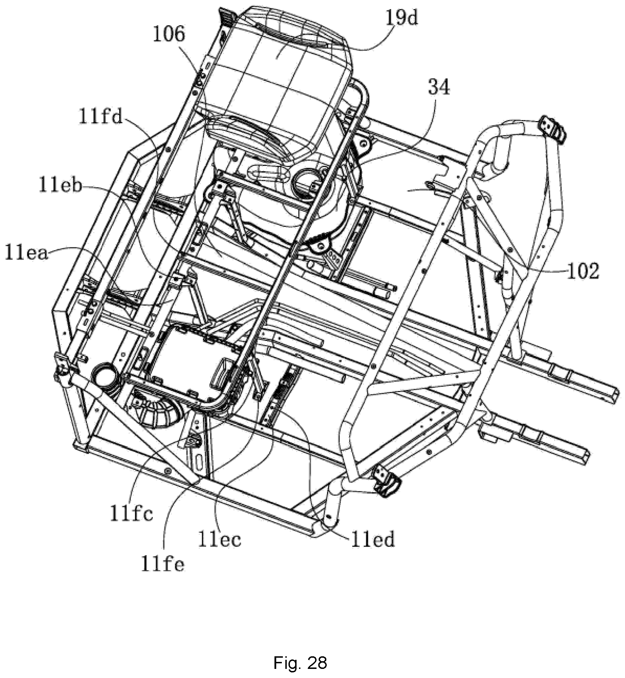

As shown in FIGS. 26 and 28, in this embodiment, the all-terrain vehicle 100 further includes the seat 17. The seat 17 is connected to the frame 11 and located in the driving space 102. Optionally, the frame 11 includes a vehicle body frame 11e and a seat bracket 11f. The seat bracket 11f is detachably connected to the vehicle body frame 11e. More optionally, the seat bracket 11f includes a transverse connecting tube 11fa, a longitudinal connecting tube 11fb, and a height support tube 11fc. A front end of the longitudinal connecting tube 11fb and an upper end of the height support tube 11fc are both connected to the transverse connecting tube 11fa. A rear end of the longitudinal connecting tube 11fb and a lower end of the height support tube 11fc are both connected to the vehicle body frame 11e. Through the above arrangement, when the seat bracket 11f needs to be disassembled or assembled, it can be separated from the vehicle body frame 11 by disconnecting the rear end of the longitudinal connecting tube 11fb and the lower end of the height support tube 11fc, thereby improving the disassembly convenience of the seat bracket 11f. In addition, connecting the front end of the longitudinal connecting tube 11fb and the upper end of the height support tube 11fc to the transverse connecting tube 11fa allows the longitudinal connecting tube 11fb and the height support tube 11fc to have a certain degree of deformability, avoiding improper assembly due to process errors, thereby improving the assembly efficiency of the seat bracket 11f.

In this embodiment, the seat connecting tube 11ea is provided with a seat connecting portion 11eb. The rear end of the longitudinal connecting tube 11fb is provided with a longitudinal connecting portion 11fd. The longitudinal connecting portion 11fd is at least partially snap-fitted into the seat connecting portion 11eb. The seat connecting portion 11eb and the longitudinal connecting portion 11fd are detachably connected by a fastener. Through the above arrangement, the longitudinal connecting tube 11fb can first be snap-fitted into the seat connecting portion 11eb to limit the displacement of the longitudinal connecting tube 11fb along the width direction of the all-terrain vehicle 100, and then reinforced with a fastener, thereby improving the assembly speed and connection stability of the longitudinal connecting tube 11fb and the connecting portion connecting portion 11eb.

Further, the transverse connecting tube 11fa extends along the width direction of the all-terrain vehicle 100. The longitudinal connecting tube 11fb extends along the length direction of the all-terrain vehicle 100 and is disposed along the width direction of the all-terrain vehicle 100. The height support tube 11fc extends along the height direction of the all-terrain vehicle 100 and is disposed along the width direction of the all-terrain vehicle 100. Through the above arrangement, the seat bracket 11f includes a plurality of transverse connecting tubes 11fa and a plurality of longitudinal connecting tubes 11fb, making the structure of the seat bracket 11f more stable, thereby improving the structural strength of the seat bracket 11f. It should be noted that when the transverse connecting tube 11fa, the longitudinal connecting tube 11fb, and the height support tube 11fc are circular tubes, the axis of the transverse connecting tube 11fa, the axis of the longitudinal connecting tube 11fb, and the axis of the height support tube 11fc are perpendicular to each other, making the structures of the transverse connecting tube 11fa, the longitudinal connecting tube 11fb, and the height support tube 11fc more compact, thereby improving the structural compactness of the transverse connecting tube 11fa, the longitudinal connecting tube 11fb, and the height support tube 11fc.

As an embodiment, the vehicle body frame 11e includes a seat connecting tube 11ea extending along the width direction of the all-terrain vehicle 100. The seat connecting tube 11ea is located behind the transverse connecting tube 11fa. The rear end of the longitudinal connecting tube 11fb is detachably connected to the seat connecting tube 11ea. Optionally, since the seat bracket 11f is relatively wide and the seat 17 occupies a large space, providing the seat connecting tube 11ea behind the seat bracket 11f can improve the structural strength of the vehicle body frame 11. Through the above arrangement, the assembly of the seat bracket 11f is facilitated, and the space utilization rate of the all-terrain vehicle 100 is also improved.

As an embodiment, the vehicle body frame 11e further includes a seat support frame 11ec disposed at the lowermost part of the frame 11. The lower end of the height support tube 11fc abuts against the seat support frame 11ec, so that the height support tube 11fc is detachably connected to the seat support frame 11ec. Optionally, the seat support frame 11ec is provided with a plurality of first through holes 11ed. The first through holes 11ed are distributed along the width direction of the all-terrain vehicle 100. The lower end of the height support tube 11fc is provided with a second through hole 11fe corresponding to the first through hole. The first through hole 11ed and the second through hole 11fe are detachably connected by a fastener. Through the above arrangement, the height support tube 11fc and the seat support frame 11ec can be stably connected, thereby improving the connection stability of the height support tube 11fc and the seat support frame 11ec. It should be noted that the first through hole 11ed and/or the second through hole 11fe are/is provided as an oblong hole, so as to adjust the position of the height support tube 11fc relative to the seat support frame 11ec, thereby improving the assembly efficiency of the height support tube 11fc and the seat support frame 11ec.

As an embodiment, an installation space 106 is formed after the vehicle body frame 11e and the seat bracket 11f are connected. The all-terrain vehicle 100 further includes an energy system 34. The energy system 34 is connected to the frame 11 and located in the installation space 106. Optionally, the energy system 34 may be a power battery, a fuel tank, or other device that supplies energy to the power system. Through the above arrangement, the connection stability between the energy system 34 and the frame 11 can be improved. At the same time, since the seat bracket 11f is easy to detach from the vehicle body frame 11e, it facilitates the installation of the energy system 34 on the frame 11, thereby further improving the assembly efficiency of the energy system 34 and the frame 11.

As an embodiment, the seat 17 includes a cushion 19d. The cushion 19d is at least partially located above the seat bracket 11f and detachably connected to the seat bracket 11f. Optionally, the cushion 19d is connected to the seat bracket 11f by fasteners, so that the cushion 19d can be stably connected to the seat bracket 11f, thereby improving the connection stability of the cushion 19d and the seat bracket 11f. In addition, the cushion 19d can also be detached from the vehicle body frame 11e together with the seat bracket 11f, thereby further improving the disassembly efficiency of the cushion 19d and the seat bracket 11f.

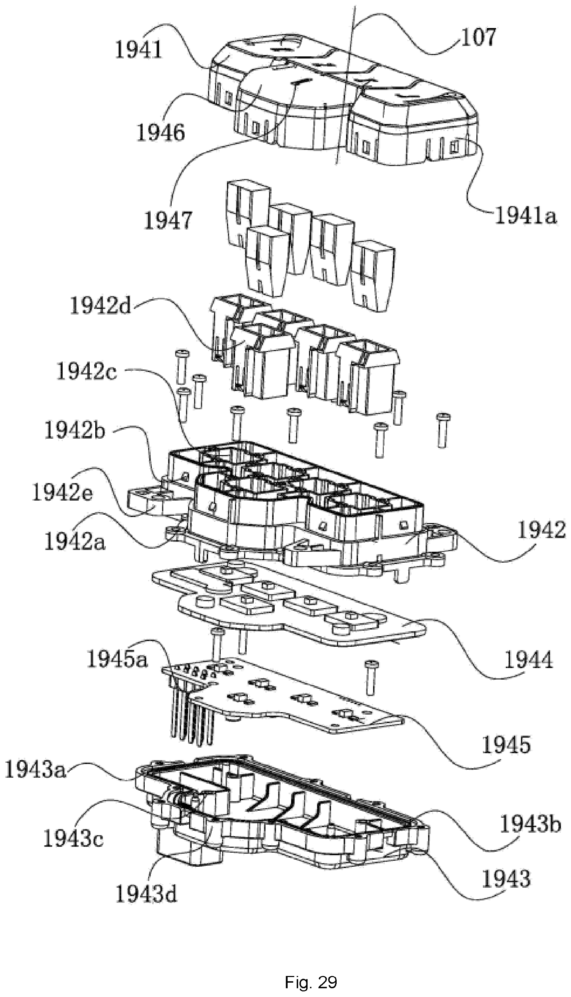

As shown in FIG. 29, as an embodiment, the all-terrain vehicle 100 further includes the transmission system 18. The transmission system 18 is connected to the power system 13 in a transmission mode, and the transmission system 18 is also electrically connected to the electrical system 19. Optionally, the gear shift switch 194 includes a first housing 1941, a second housing 1942, a third housing 1943, and a sealing gasket 1944. The first housing 1941 and the third housing 1943 are connected to two sides of the second housing 1942. The sealing gasket 1944 seals between the second housing 1942 and the third housing 1943. The sealing gasket 1944 is snap-fitted with the third housing 1943. Through the above arrangement, the sealing performance between the second housing 1942 and the third housing 1943 can be improved, thereby improving the sealing performance of the gear shift switch 194. In addition, the gear shift switch 194 includes a circuit control board 1945. The third housing 1943 is provided with a circuit snap-fit portion 1943a and a sealing snap-fit portion 1943b. The circuit control board 1945 is snap-fitted into the circuit snap-fit portion 1943a. The sealing gasket 1944 is snap-fitted into the sealing snap-fit portion 1943b. A side of the sealing gasket 1944 close to the third housing 1943 abuts against the circuit control board 1945, so as to prevent the circuit control board 1945 from being eroded by external substances such as rainwater, thereby protecting the circuit control board 1945.

As an embodiment, a preset straight line 107 perpendicular to both the circuit control board 1945 and the sealing gasket 1944 is defined. When viewed along the preset straight line 107, the sealing snap-fit portion 1943b substantially surrounds the circuit snap-fit portion 1943a. Through the above arrangement, the sealing gasket 1944 can completely seal the circuit control board 1945 in a sealed space, thereby improving the sealing performance of the sealed space, and thus improving the service life of the circuit control board 1945.

Exemplarily, the circuit control board 1945 is provided with a circuit fixing hole 1945a. The third housing 1943 is provided with a housing fixing hole 1943c corresponding to the circuit fixing hole 1945a. An axis of the circuit fixing hole 1945a and an axis of the housing fixing hole 1943c are substantially perpendicular to the preset straight line 107. The circuit fixing hole 1945a and the housing fixing hole 1943c are connected by a fastener, so that the circuit control board 1945 is connected to the third housing 1943. Through the above arrangement, the connection stability between the circuit control board 1945 and the third housing 1943 can be improved, thereby improving the structural stability of the gear shift switch 194.

Further, an outer edge of the second housing 1942 is provided with a plurality of upper connecting portions 1942a. An outer edge of the third housing 1943 is provided with a plurality of lower connecting portions 1943d corresponding to the upper connecting portions 1942a. The upper connecting portions 1942a and the lower connecting portions 1943d are detachably connected by fasteners. Through the above arrangement, the connection stability between the second housing 1942 and the third housing 1943 can be improved.

Still further, an outer edge of the first housing 1941 close to the second housing 1942 is provided with a first snap-fit portion 1941a. The second housing 1942 is provided with a second snap-fit portion 1942b corresponding to the first snap-fit portion 1941a. The first snap-fit portion 1941a is snap-fitted with the second snap-fit portion 1942b, so that the first housing 1941 is detachably connected to the second housing 1942. Through the above arrangement, the connection stability between the first housing 1941 and the second housing 1942 can be improved.

As an embodiment, the second housing 1942 includes a button hole 1942c. The button hole 1942c extends along the preset straight line 107. A button block 1942d is disposed in the button hole 1942c. The circuit control board 1945 is provided with a button contact 1945b. One end of the button block 1942d abuts against the button contact 1945b. Optionally, an end face of the first housing 1941 away from the second housing 1942 is provided with a plurality of gear shift buttons 1946. The gear shift buttons 1946 abut against the other end of the button block 1942d away from the button contact 1945b. When a pressure is applied to a gear shift button 1946, the pressure can be transmitted to the button contact 1945b through the button block 1942d, so as to achieve the gear shifting process of the all-terrain vehicle 100, thereby improving the operability of the all-terrain vehicle 100. It should be noted that the gear shift buttons 1946 are provided with a display portion 1947. After pressing the gear shift button 1946, the display portion 1947 can display a gear signal, thereby facilitating the display of the state of the gear shift switch 194 and improving the driving experience of the driver.

As an embodiment, the vehicle body cover 16 is provided with a connection limiting portion 16e (see FIG. 18). The second housing 1942 is provided with a fixed connecting portion 1942e corresponding to the connection limiting portion 16e. The connection limiting portion 16e is connected to the fixed connecting portion 1942e, so that the gear shift switch 194 is connected to the vehicle body cover 16. Through the above arrangement, the gear shift switch 194 can be quickly assembled on the vehicle body cover 16, thereby improving the assembly performance of the gear shift switch 194. In addition, the end face of the first housing 1941 away from the second housing 1942 is treated with a rubber vulcanization process to prevent substances such as rainwater from entering the first housing 1941 through gaps between the gear shift buttons 1946, thereby improving the sealing performance of the first housing 1941.

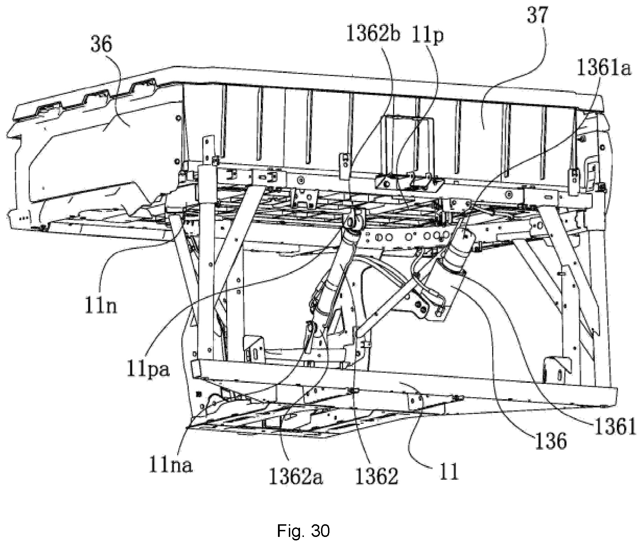

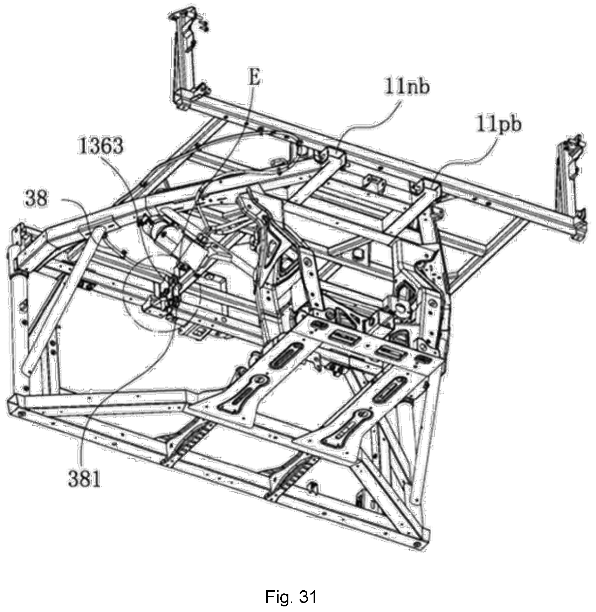

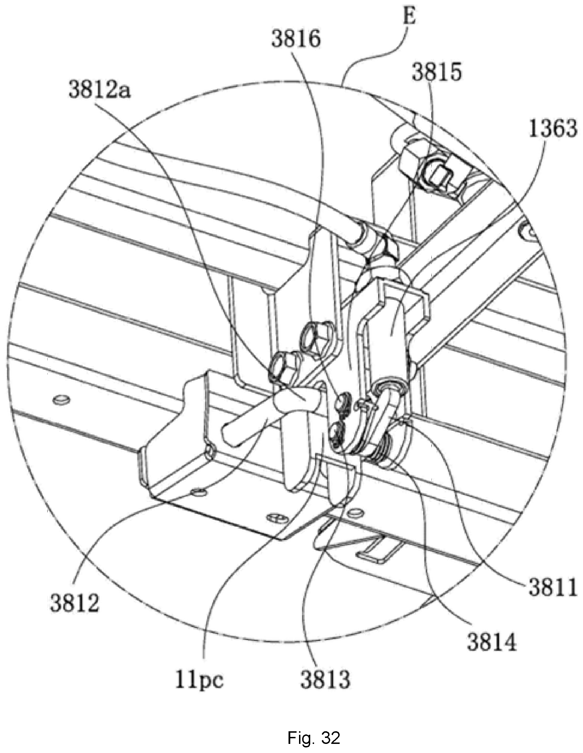

As shown in FIGS. 30, 31, and 32, as an embodiment, the all-terrain vehicle 100 includes a transport system 36. The transport system 36 is at least partially connected to the frame 11. Optionally, the frame 11 includes a rear support frame 11n and a rotating bracket 11p located at a rear portion of the frame 11. The rotating bracket 11p is at least partially located above the rear support frame 11n and rotatably connected to the rear support frame 11n. More optionally, the power system 13 includes a hydraulic device 136. One end of the hydraulic device 136 is rotatably connected to the rotating bracket 11p, and the other end of the hydraulic device 136 is rotatably connected to the rear support frame 11n. The rotating bracket 11p includes a first state and a second state. The hydraulic device 136 can push the rotating bracket 11p to switch between the first state and the second state. Optionally, when the rotating bracket 11p is in the first state, the rotating bracket 11p is parallel to the rear support frame 11n. When the rotating bracket 11p is in the second state, the rotating bracket 11p and the rear support frame 11n form an angle. Through the above arrangement, the rotating bracket 11p is rotatably connected to the rear support frame 11n by the hydraulic device 136, thereby improving the switching speed of the rotating bracket 11p and the rear support frame 11n, and thus improving the operability of the rotating bracket 11p and the rear support frame 11n. It can be understood that the all-terrain vehicle 100 further includes a cargo box 37. The cargo box 37 is fixedly connected to an upper side of the rotating bracket 11p. The cargo box 37 can rotate with the rotating bracket 11p. The cargo box 37 is used to carry cargo. When the cargo box 37 is being loaded or unloaded, the rotating bracket 11p can be driven by the hydraulic device 136, so that the cargo box 37 can rotate with the rotating bracket 11p, thereby improving the working efficiency of loading or unloading the cargo box 37.

Exemplarily, the hydraulic device 136 includes a driving member 1361 and a telescopic member 1362. The driving member 1361 is connected to the telescopic member 1362 in a transmission mode. The driving member 1361 can control a length of the telescopic member 1362. Optionally, the telescopic member 1362 has a telescopic capability. Two ends of the telescopic member 1362 are connected to the rotating bracket 11p and the rear support frame 11n, so that the rotating bracket 11p and the rear support frame 11n are rotatably connected by the telescopic member 1362. Further, the driving member 1361 drives the telescopic member 1362 to drive the rotation of the rotating bracket 11p and the rear support frame 11n. Through the above arrangement, separating the driving member 1361 and the telescopic member 1362 can reduce the volume of the hydraulic device 136, so as to prevent the hydraulic device 136 from occupying a large space, thereby improving the space utilization rate of the all-terrain vehicle 100.

As an embodiment, the driving member 1361 is further provided with a drive control portion 1361a. The drive control portion 1361a is electrically connected to the electrical system 19. The electrical system 19 controls the operation of the drive control portion 1361a. Optionally, the electrical system 19 is connected to the drive control portion 1361a by a wiring harness. A motor is disposed in the driving member 1361. The drive control portion 1361a can control the motor to rotate, thereby controlling the operation of the telescopic member 1362.

As an embodiment, the rear support frame 11n is provided with a support fixing portion 11na. The telescopic member 1362 includes a first rotating portion 1362a. The first rotating portion 1362a is rotatably connected to the support fixing portion 11na. Further, the rotating bracket 11p is provided with a bracket fixing portion 11pa. An end of the telescopic member 1362 away from the support fixing portion 11na is provided with a second rotating portion 1362b. The second rotating portion 1362b is rotatably connected to the bracket fixing portion 11pa. Through the above arrangement, the first rotating portion 1362a and the second rotating portion 1362b can rotate simultaneously, so as to control the distance between the support fixing portion 11na and the bracket fixing portion 11pa, thereby improving the rotation efficiency of the support fixing portion 11na and the bracket fixing portion 11pa.

It can be understood that a rear end of the rear support frame 11n is provided with a rear end fixing portion 11nb disposed along the width direction of the all-terrain vehicle 100. The rotating bracket 11p is provided with a rear end rotating portion 11pb cooperating with the rear end fixing portion 11nb. The rear end rotating portion 11pb is rotatably connected to the rear end fixing portion 11nb, thereby improving the rotation speed of the rear support frame 11n and the rotating bracket 11p.

As an embodiment, the hydraulic device 136 further includes a pushing member 1363. The driving member 1361 is connected to the pushing member 1363 in a transmission mode. The driving member 1361 can control a length of the pushing member 1363. Optionally, the all-terrain vehicle 100 further includes a vehicle lock system 38. The vehicle lock system 38 includes a locking device 381. The pushing member 1363 is connected to the locking device 381 in a transmission mode. The pushing member 1363 can push the locking device 381 to move. Through the above arrangement, the locking device 381 can limit the rotation of the rear support frame 11n and the rotating bracket 11p. The pushing member 1363 can open or close the locking device 381. When the locking device 381 is closed, the rear support frame 11n and the rotating bracket 11p are fixedly connected, thereby improving the connection stability between the rear support frame 11n and the rotating bracket 11p. When the locking device 381 is open, the rear support frame 11n and the rotating bracket 11p are rotatably connected, thereby improving the rotation flexibility between the rear support frame 11n and the rotating bracket 11p. In addition, the driving member 1361 can simultaneously drive the telescopic member 1362 and the pushing member 1363 to work, thereby further improving the intelligence of the all-terrain vehicle 100.

As an embodiment, the locking device 381 includes a latching member 3811 and a positioning member 3812. When the latching member 3811 is snap-fitted with the positioning member 3812, the rotating bracket 11p is in the first state. When the latching member 3811 is separated from the positioning member 3812, the rotating bracket 11p is in the second state. Optionally, the latching member 3811 is provided on the rotating bracket 11p, and the positioning member 3812 is provided on the rear support frame 11n. Through the above arrangement, the connection between the latching member 3811 and the positioning member 3812 is simplified, thereby improving the assembly speed of the latching member 3811 and the positioning member 3812, and thus improving the working efficiency of the locking device 381.

As an embodiment, the hydraulic device 136 is connected to the locking device 381 in a transmission mode. The rear support frame 11n and the rotating bracket 11p are rotatably connected by the hydraulic device 136, and the rear support frame 11n and the rotating bracket 11p are locked by the locking device 381. Optionally, the pushing member 1363 can push the latching member 3811 to rotate. The locking device 381 further includes a latching shaft 3813 and a latching torsion spring 3814. The latching member 3811 and the latching torsion spring 3814 are both sleeved on the latching shaft 3813. The latching torsion spring 3814 is at least partially snap-fitted on the latching member 3811. The latching member 3811 includes an open state and a closed state. The pushing member 1363 pushes the latching member 3811 into the open state, and the latching torsion spring 3814 pushes the latching member 3811 into the closed state. Through the above arrangement, under the action of the latching shaft 3813 and the latching torsion spring 3814, the latching member 3811 can be snap-fitted with or separated from the positioning member 3812, thereby facilitating the rotation or locking of the rotating bracket 11p, further facilitating the lifting and lowering of the cargo box 37, and improving the intelligence of the all-terrain vehicle 100.

Exemplarily, the locking device 381 further includes a support member 3815 and a limit shaft 3816. The latching shaft 3813 and the limit shaft 3816 are both fixedly connected to the support member 3815. When the latching member 3811 is in the open state, an end of the latching member 3811 close to the pushing member 1363 is separated from the limit shaft 3816. When the latching member 3811 is in the closed state, the end of the latching member 3811 close to the pushing member 1363 contacts the limit shaft 3816. Through the above arrangement, the support member 3815 and the limit shaft 3816 can be used to limit the rotation angle of the latching member 3811, so as to prevent the pushing member 1363 from being subjected to a thrust from the latching member 3811 due to an excessive rotation angle, which would reduce its service life, thereby improving the service life of the pushing member 1363.

As an embodiment, the positioning member 3812 includes a positioning portion 3812a. The rotating bracket 11p is provided with a limiting groove 11pc. When the rotating bracket 11p is in the first state, the positioning portion 3812a is at least partially located in the limiting groove 11pc, and an end of the latching member 3811 away from the pushing member 1363 is at least partially located below the positioning portion 3812a. Optionally, when the rotating bracket 11p is in the first state, the limiting groove 11pc can limit the movement of the rotating bracket 11p along the length direction of the all-terrain vehicle 100, and the latching member 3811 can limit the movement of the rotating bracket 11p along the height direction, thereby improving the connection stability between the rotating bracket 11p and the rear support frame 11n. In addition, a plurality of buffer structures are further provided between the rotating bracket 11p and the rear support frame 11n, thereby preventing rigid contact between the rotating bracket 11p and the rear support frame 11n, and thus extending the service life of the rotating bracket 11p and the rear support frame 11n.

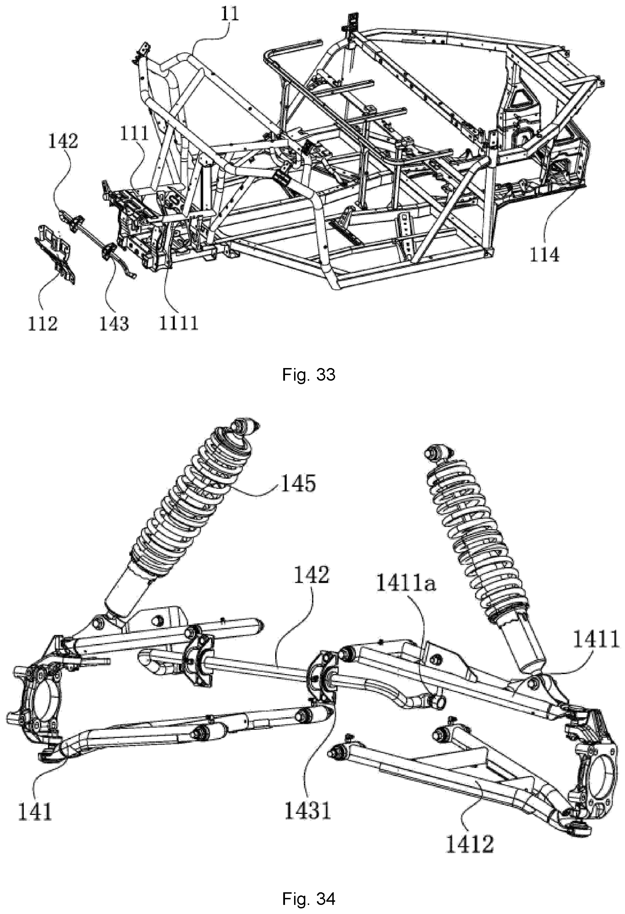

As shown in FIGS. 33 and 34, as an embodiment, the suspension system 14 includes a front swing arm 141 and a front torsion bar 142. The front swing arm 141 is located in front of the frame 11 and rotatably connected to the frame 11. The front torsion bar 142 is rotatably connected to the frame 11 and the front swing arm 141. Optionally, the front torsion bar 142 balances the up-and-down jumping of the travel system 12 through a torsion beam, so as to reduce the shaking of the vehicle and keep the vehicle stable, thereby improving the driving stability of the all-terrain vehicle 100. The front swing arm 141 includes a front upper arm 1411 and a front lower arm 1412 disposed along the height direction of the all-terrain vehicle 100. The front torsion bar 142 is located between the front upper arm 1411 and the front lower arm 1412. The front torsion bar 142 is connected to the front upper arm 1411. Through the above arrangement, the structure of the front torsion bar 142 is optimized, so that the front torsion bar 142 can be arranged between the front upper arm 1411 and the front lower arm 1412, thereby making the structures of the front torsion bar 142, the front upper arm 1411, and the front lower arm 1412 more compact, improving the structural compactness of the suspension system 14, and further improving the space utilization rate of the all-terrain vehicle 100.

In this embodiment, the frame 11 includes an integrated frame 111 located at a front portion thereof. The front swing arm 141 and the front torsion bar 142 are rotatably connected to the integrated frame 111. Optionally, when viewed along the height direction of the all-terrain vehicle 100, the front torsion bar 142 is substantially U-shaped, and the front torsion bar 142 at least partially surrounds the integrated frame 111. Through the above arrangement, the structures of the front torsion bar 142 and the integrated frame 111 are more compact, thereby improving the structural compactness of the front torsion bar 142 and the integrated frame 111.

Exemplarily, at least two positioning rotating members 143 are sleeved on the front torsion bar 142. The positioning rotating members 143 are disposed along the width direction of the all-terrain vehicle 100 and fixedly connected to the integrated frame 111. The front torsion bar 142 is rotatably connected to the positioning rotating members 143. Optionally, the front torsion bar 142 is substantially formed by bending a circular tube. The positioning rotating member 143 is provided with a circular through hole matching the circular tube, so that the front torsion bar 142 can rotate in the positioning rotating member 143, thereby improving the working efficiency of the front torsion bar 142.

Further, a front side of the integrated frame 111 is provided with an integrated connecting portion 1111. The positioning rotating member 143 is provided with a positioning connecting portion 1431 corresponding to the integrated connecting portion 1111. The positioning connecting portion 1431 is detachably connected to the integrated connecting portion 1111 by a fastener. Optionally, the fastener may be a bolt or other component, so that the positioning rotating member 143 can be easily detached from the integrated frame 111, thereby improving the disassembly speed of the positioning rotating member 143 and the integrated frame 111. At the same time, the front torsion bar 142 can be connected to the integrated frame 111 by the positioning rotating member 143, so that the front torsion bar 142 can be detached from the frame 11 together with the positioning rotating member 143, thereby improving the disassembly efficiency of the front torsion bar 142.

As an embodiment, along the width direction of the all-terrain vehicle 100, the front upper arm 1411 is rotatably connected to two sides of the integrated frame 111. A lower end of the front upper arm 1411 is provided with an arm connecting portion 1411a. Two ends of the front torsion bar 142 are rotatably connected to the arm connecting portion 1411a. Optionally, the front upper arm 1411 itself is directly connected to the integrated frame 111, and at the same time, the front upper arm 1411 is also connected to the integrated frame 111 by the front torsion bar 142. Through the above arrangement, the connection strength between the front upper arm 1411 and the integrated frame 111 can be improved, thereby improving the stability of the all-terrain vehicle 100.

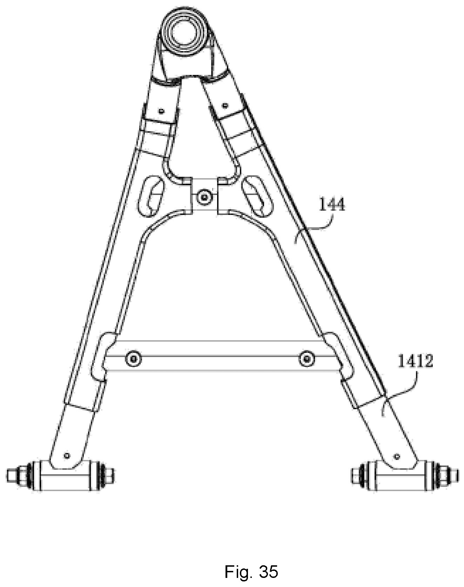

As shown in FIG. 35, as an embodiment, the suspension system 14 further includes a reinforcing bracket plate 144. The reinforcing bracket plate 144 at least partially surrounds the front swing arm 141 and is fixedly connected to the front swing arm 141. Optionally, the reinforcing bracket plate 144 is U-shaped. The reinforcing bracket plate 144 is located below the front lower arm 1412 and fixedly connected to the front lower arm 1412. Through the above arrangement, the structural strength of the front lower arm 1412 can be improved, thereby improving the structural stability of the suspension system 14. It should be noted that the reinforcing bracket plate 144 may also surround the front upper arm 1411 and be fixedly connected to the front upper arm 1411, thereby also improving the structural strength of the front upper arm 1411. Since the front upper arm 1411 and the front lower arm 1412 are connected to each other, the structural stability of the suspension system 14 is improved.

In this embodiment, when viewed along the height direction of the all-terrain vehicle 100, the front upper arm 1411, the front lower arm 1412, the front torsion bar 142, and the reinforcing bracket plate 144 at least partially overlap. Through the above arrangement, the structures of the front upper arm 1411, the front lower arm 1412, the front torsion bar 142, and the reinforcing bracket plate 144 can be made more compact, thereby improving the structural compactness of the suspension system 14.

As shown in FIG. 34, as an embodiment, the suspension system 14 further includes a front shock absorber 145. The front shock absorber 145 is located on two sides of the frame 11 along the width direction of the all-terrain vehicle 100. An upper end of the front shock absorber 145 is connected to the frame 11, and a lower end of the front shock absorber 145 is connected to the front upper arm 1411. The front torsion bar 142 is at least partially located between the front shock absorbers 145. Optionally, the front shock absorber 145 and the front torsion bar 142 are both connected to the front upper arm 1411 to improve the load-bearing capacity of the front upper arm 1411. More optionally, since the layout space of the front upper arm 1411 is limited, the front shock absorber 145 is connected to the upper end of the front upper arm 1411, and the front torsion bar 142 is connected to the lower end of the front upper arm 1411, thereby separating the front shock absorber 145 and the front torsion bar 142 to avoid interference between the front shock absorber 145 and the front torsion bar 142, thus improving the layout rationality of the suspension system 14. In addition, the front upper arm 1411 is substantially located between the front shock absorber 145 and the front torsion bar 142 along the height direction of the all-terrain vehicle 100, making the structures of the front torsion bar 142, the front shock absorber 145, and the front upper arm 1411 more compact, thereby improving the structural compactness of the front torsion bar 142, the front shock absorber 145, and the front upper arm 1411, and improving the space utilization rate of the all-terrain vehicle 100.

As shown in FIG. 33, as an embodiment, the frame 11 further includes a winch bracket 112. The winch bracket 112 is located on the front side of the integrated frame 111 and fixedly connected to the integrated frame 111. The front torsion bar 142 is at least partially located between the winch bracket 112 and the integrated frame 111 in the length direction of the all-terrain vehicle 100. Optionally, the winch bracket 112 has relatively high structural strength. Since the structural strength of the front torsion bar 142 is relatively low, the winch bracket 112 is disposed forward of the front torsion bar 142 to prevent the front torsion bar 142 from being deformed or damaged due to the front end of the all-terrain vehicle 100 hitting an external object, thus improving the service life of the front torsion bar 142.

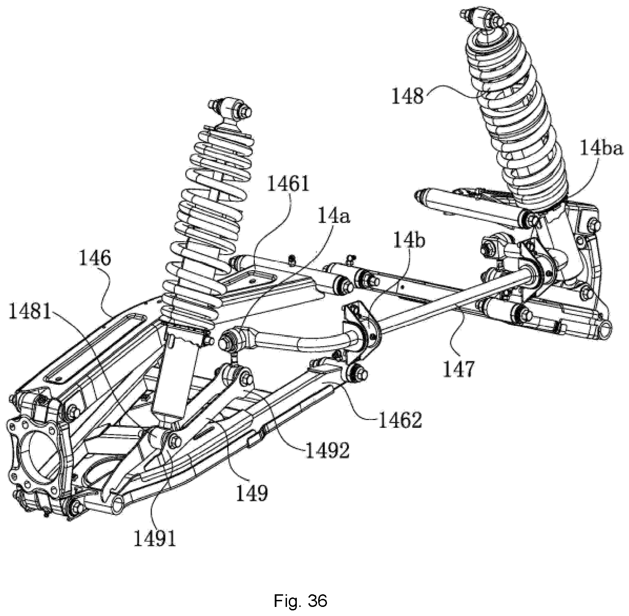

As shown in FIG. 36, as an embodiment, the suspension system 14 includes a rear swing arm 146, a rear torsion bar 147, and a rear shock absorber 148 located at a rear portion of the frame 11. The rear swing arm 146, the rear torsion bar 147, and the rear shock absorber 148 are all rotatably connected to the frame 11. The rear swing arm 146 is provided with an arm mounting plate 149. The rear torsion bar 147 and the rear shock absorber 148 are both rotatably connected to the arm mounting plate 149. Optionally, the frame 11 is used to support the rear swing arm 146, the rear torsion bar 147, and the rear shock absorber 148, and the rear swing arm 146, the rear torsion bar 147, and the rear shock absorber 148 are also connected to the arm mounting plate 149, so that the rear swing arm 146, the rear torsion bar 147, and the rear shock absorber 148 support each other, thereby improving the connection strength of the rear swing arm 146, the rear torsion bar 147, and the rear shock absorber 148, and thus improving the structural stability of the suspension system 14. In addition, the structures of the rear swing arm 146, the rear torsion bar 147, the rear shock absorber 148, and the frame 11 are compact, thereby improving the structural compactness of the suspension system 14.

In this embodiment, the rear swing arm 146 includes a rear upper arm 1461 and a rear lower arm 1462 disposed along the height direction of the all-terrain vehicle 100. The arm mounting plate 149 is located between the rear upper arm 1461 and the rear lower arm 1462 and fixedly connected to the rear lower arm 1462. Optionally, integrating the arm mounting plate 149 on the rear lower arm 1462 can improve the strength of the rear lower arm 1462, thereby improving the connection stability between the arm mounting plate 149 and the rear lower arm 1462. At the same time, the structures of the arm mounting plate 149, the rear upper arm 1461, and the rear lower arm 1462 are compact, thereby improving the structural compactness of the suspension system 14.

Exemplarily, the arm mounting plate 149 extends substantially along the width direction of the all-terrain vehicle 100. An end of the arm mounting plate 149 away from the frame 11 is provided with an arm mounting portion 1491. A lower end of the rear shock absorber 148 is provided with a shock mounting portion 1481. The arm mounting portion 1491 is rotatably connected to the shock mounting portion 1481. Through the above arrangement, the rear shock absorber 148 can be arranged obliquely, so as to avoid increasing the width of the frame 11, thereby improving the layout rationality of the frame 11 and the rear shock absorber 148, and further improving the space utilization rate of the all-terrain vehicle 100.

It should be noted that, when viewed along the height direction of the all-terrain vehicle 100, the rear torsion bar 147 is substantially U-shaped. The rear torsion bar 147 is at least partially located between the rear upper arm 1461 and the rear lower arm 1462. The rear torsion bar 147 at least partially surrounds the frame 11. Through the above arrangement, the structures of the rear torsion bar 147, the rear upper arm 1461, the rear lower arm 1462, and the frame 11 can be made more compact, thereby improving the structural compactness of the suspension system 14 and the frame 11.

As an embodiment, an end of the arm mounting plate 149 close to the frame 11 is provided with a rotating mounting portion 1492. Two ends of the rear torsion bar 147 are each provided with a torsion connecting rod 14a. One end of the torsion connecting rod 14a is rotatably connected to the rear torsion bar 147, and the other end of the torsion connecting rod 14a is rotatably connected to the rotating mounting portion 1492. Optionally, the arm mounting plate 149 and the rear torsion bar 147 are both rotatably connected to the torsion connecting rod 14a, and the rotation direction between the arm mounting plate 149 and the torsion connecting rod 14a is different from the rotation direction between the rear torsion bar 147 and the torsion connecting rod 14a, thereby preventing the rear torsion bar 147 from being damaged by forces from multiple directions, thus protecting the rear torsion bar 147 and improving the service life of the suspension system 14.

In this embodiment, the rear shock absorber 148 is located on two sides of the frame 11 along the width direction of the all-terrain vehicle 100. An upper end of the rear shock absorber 148 is connected to the frame 11, and a lower end of the rear shock absorber 148 is connected to the rear lower arm 1462. The rear torsion bar 147 and the torsion connecting rod 14a are located between the rear shock absorber 148. Through the above arrangement, the structures of the rear shock absorber 148, the rear torsion bar 147, and the torsion connecting rod 14a can be made more compact, thereby improving the structural compactness of the rear shock absorber 148, the rear torsion bar 147, and the torsion connecting rod 14a, and further improving the structural compactness of the suspension system 14.

As an embodiment, at least two installation rotating members 14b are sleeved on the rear torsion bar 147. The installation rotating members 14b are disposed along the width direction of the all-terrain vehicle 100 and fixedly connected to the frame 11. The rear torsion bar 147 is rotatably connected to the installation rotating members 14b. Optionally, the rear torsion bar 147 is substantially formed by bending a circular tube. The installation rotating member 14b is provided with a circular through hole matching the circular tube, so that the rear torsion bar 147 can rotate in the installation rotating member 14b, thereby improving the working efficiency of the rear torsion bar 147.

As shown in FIGS. 33 and 36, in this embodiment, a rear side of the frame 11 is provided with a torsion bar connecting portion 114. The installation rotating member 14b is provided with an installation connecting portion 14ba corresponding to the torsion bar connecting portion 114. The installation connecting portion 14ba is detachably connected to the torsion bar connecting portion 114 by a fastener. Optionally, the fastener may be a bolt or other component, so that the installation rotating member 14b can be easily detached from the frame 11, thereby improving the disassembly speed of the installation rotating member 14b and the frame 11. At the same time, the rear torsion bar 147 can be connected to the frame 11 by the installation rotating member 14b, so that the rear torsion bar 147 can be detached from the frame 11 together with the installation rotating member 14b, thereby improving the disassembly efficiency of the rear torsion bar 147. Similarly, the rear torsion bar 147 can also be installed on the frame 11 together with the installation rotating member 14b, thereby improving the installation efficiency of the rear torsion bar 147.

As an embodiment, the reinforcing bracket plate 144 at least partially surrounds the rear swing arm 146 and is fixedly connected to the rear swing arm 146. Optionally, the reinforcing bracket plate 144 is located below the rear lower arm 1462 and fixedly connected to the rear lower arm 1462. Since the rear lower arm 1462 integrates the arm mounting plate 149, the rear shock absorber 148, the rear torsion bar 147, and the torsion connecting rod 14a, the structural strength requirement for the rear lower arm 1462 is relatively high. Therefore, in the present disclosure, the reinforcing bracket plate 144 is connected to the rear lower arm 1462. Through the above arrangement, the structural strength of the rear lower arm 1462 can be improved, thereby improving the structural stability of the suspension system 14. It should be noted that the reinforcing bracket plate 144 may also surround the rear upper arm 1461 and be fixedly connected to the rear upper arm 1461, thereby also improving the structural strength of the rear upper arm 1461. Since the rear upper arm 1461 and the rear lower arm 1462 are connected to each other, the structural stability of the suspension system 14 is improved.

It should be understood that those skilled in the art may make improvements or modifications based on the above description without departing from the concept of the present invention, and all such improvements and modifications shall fall within the protection scope of the appended claims.

## Claims

1. An all-terrain vehicle, comprising:
a frame, a rear accommodating space being defined by the frame;
a travel system, the travel system being at least partially located below the frame;
a power system, the power system being supported by the frame and at least partially located in the rear accommodating space, the power system comprising an engine, an air filter, and an air intake duct, the engine being connected to the air filter, the air intake duct being connected to the air filter;
a transmission system, the transmission system being at least partially located in the rear accommodating space, the transmission system comprising a transmission case, a gear transmission mechanism located in the transmission case, and a continuously variable transmission connected to the gear transmission mechanism in a transmission mode, the gear transmission mechanism being connected to the travel system in a transmission mode, the continuously variable transmission being connected to the engine in a transmission mode;
a seat, the seat being at least partially located forward of the rear accommodating space, the seat comprising a backrest;
wherein,
the air filter is located below the seat, when viewed along a front-rear direction of the all-terrain vehicle, the engine at least partially overlaps the transmission case, the engine and the transmission case are both located behind the seat, the air intake duct at least partially overlaps the backrest, and when viewed along a left-right direction of the all-terrain vehicle, the engine at least partially overlaps the continuously variable transmission, and the transmission case at least partially overlaps the continuously variable transmission.

2. The all-terrain vehicle according to claim 1, wherein the engine is located between the transmission case and the seat along a length direction of the all-terrain vehicle.

3. The all-terrain vehicle according to claim 1, wherein, the all-terrain vehicle further comprises a cargo box, the cargo box is located above the rear accommodating space; and along the length direction of the all-terrain vehicle, the air intake duct is at least partially located between the cargo box and the backrest; along the width direction of the all-terrain vehicle, the air intake duct and the air filter are located on the same side of the engine.

4. The all-terrain vehicle according to claim 1, wherein, the all-terrain vehicle further comprises a side intake mechanism and an wind intake duct, the wind intake duct communicates with both the continuously variable transmission and the side intake mechanism, the side intake mechanism is exposed to the exterior of the all-terrain vehicle and communicates with the outside; the power system comprises an outlet pipe and an exhaust pipe, the outlet pipe communicates with the continuously variable transmission, the exhaust pipe is connected to the engine, an outlet opening of the outlet pipe is oriented toward the engine and the exhaust pipe.

5. The all-terrain vehicle according to claim 1, wherein, the power system further comprises an exhaust pipe and a muffler, the exhaust pipe respectively connecting the muffler and the engine, and along a height direction of the all-terrain vehicle, the exhaust pipe at least partially overlaps the transmission case; the exhaust pipe is located above the transmission case.

6. The all-terrain vehicle according to claim 1, wherein, the engine further comprises a magneto and a crankshaft, the magneto is connected to the crankshaft in a transmission mode, the crankshaft is connected to the continuously variable transmission in a transmission mode, and along the width direction of the all-terrain vehicle, the magneto and the continuously variable transmission are respectively located on two sides of the crankshaft.

7. The all-terrain vehicle according to claim 6, wherein, the engine further comprises a generator, the generator is connected to the crankshaft in a transmission mode, the generator and the magneto is located on the same side of the crankshaft; the generator is located above the magneto and the crankshaft.

8. The all-terrain vehicle according to claim 7, wherein, the all-terrain vehicle further comprises a compressor, the compressor is connected to the crankshaft in a transmission mode, the compressor is connected to the generator in a transmission mode; the compressor, the generator, and the magneto are located on the same side of the crankshaft; the compressor is located behind the magneto.

9. The all-terrain vehicle according to claim 8, wherein, the axis of the magneto, the axis of the generator, and the axis of the compressor each extend substantially along the width direction of the all-terrain vehicle, defining a longitudinal plane perpendicular to the width direction of the all-terrain vehicle, a projection of the axis of the magneto onto the longitudinal plane along the width direction is defined as a magneto projection point, a projection of the axis of the generator onto the longitudinal plane along the width direction is defined as a generator projection point, a projection of the axis of the compressor onto the longitudinal plane along the width direction is defined as a compressor projection point, a line connecting the magneto projection point and the generator projection point is defined as a first connecting line, a line connecting the generator projection point and the compressor projection point is defined as a second connecting line, an angle between the first connecting line and the second connecting line is in the range from 43° to 65°.

10. The all-terrain vehicle according to claim 9, wherein, a line connecting the compressor projection point and the magneto projection point is defined as a third connecting line, an angle between the third connecting line and the first connecting line is in the range from 34° to 52°.

11. The all-terrain vehicle according to claim 1, wherein, the engine comprises a crankshaft, a generator, and a pulley, the crankshaft is fixedly connected to the pulley, the pulley is connected to the generator by a belt in a transmission mode;
the power system further comprises an installation tool for installing the belt, the pulley is connected to the crankshaft by a fastener, the installation tool has a length along a radial direction of the pulley greater than the outer diameter of the pulley, one end of the installation tool is connected to the fastener, a slot for receiving the belt is defined on the end of the installation tool away from the fastener;
when the installation tool is connected to the fastener, the belt is located in the slot, and the belt is mounted on the generator, the installation tool rotates along the axis of the pulley and drives the pulley to rotate, so that the belt is mounted on the pulley.

12. The all-terrain vehicle according to claim 11, wherein, the installation tool comprises a tool connecting portion and a belt guiding portion, the tool connecting portion is connected to the fastener, the belt guiding portion extends substantially along the radial direction of the pulley, one end of the belt guiding portion is connected to or integrally formed with the tool connecting portion, the slot is defined on the end of the belt guiding portion away from the tool connecting portion.

13. The all-terrain vehicle according to claim 12, wherein, the tool connecting portion is provided with a snap-fit hole substantially conforming to the outer contour of the fastener, the fastener is at least partially located in the snap-fit hole and snap-fitted with the snap-fit hole.

14. The all-terrain vehicle according to claim 11, wherein, the power system further comprises a magneto, the magneto is connected to the crankshaft in a transmission mode, the generator is connected to the crankshaft in a transmission mode, the generator is located above the crankshaft and behind the crankshaft, axes of the magneto and the generator each extends substantially along the width direction of the all-terrain vehicle, the axis of the magneto substantially coinciding with a rotation center line of the crankshaft, defining a longitudinal plane perpendicular to the width direction of the all-terrain vehicle, a projection of the axis of the magneto onto the longitudinal plane along the width direction is defined as a magneto projection point, a projection of the axis of the generator onto the longitudinal plane along the width direction is defined as a generator projection point, a distance along the height direction of the all-terrain vehicle between the magneto projection point and the generator projection point is defined as a motor height, a distance along the length direction of the all-terrain vehicle between the magneto projection point and the generator projection point is defined as a motor length, a ratio of the motor height to the motor length is in the range from 0.88 to 1.4.

15. The all-terrain vehicle according to claim 14, wherein, the all-terrain vehicle further comprises a compressor, the compressor is connected to the crankshaft in a transmission mode, the compressor is located behind the crankshaft, and the compressor is further located below the generator.

16. The all-terrain vehicle according to claim 15, wherein, an axis of the compressor extends substantially along the width direction of the all-terrain vehicle, a projection of the axis of the compressor onto the longitudinal plane along the width direction is defined as a compressor projection point, a line connecting the magneto projection point and the generator projection point is defined as a first connecting line, a line connecting the generator projection point and the compressor projection point is defined as a second connecting line, an angle between the first connecting line and the second connecting line ranging from 43° to 65°; a line connecting the compressor projection point and the magneto projection point is defined as a third connecting line, an angle between the third connecting line and the first connecting line ranging from 34° to 52°.

17. The all-terrain vehicle according to claim 15, wherein, along the width direction of the all-terrain vehicle, the compressor, the generator, and the magneto are all located on the same side of the crankshaft.

18. The all-terrain vehicle according to claim 15, wherein, the power system further comprises a pulley, the pulley is fixedly connected to the crankshaft, the pulley, the generator, and the compressor is connected by a belt; the belt sequentially passes through the pulley, the generator, and the compressor;
or the power system further comprises a crankcase, a guide pulley system, and a pulley, the crankshaft is located in the crankcase, the pulley is fixedly connected to the crankshaft, the guide pulley system is connected to the crankcase, the pulley, the guide pulley system, the generator, and the compressor are connected by a belt; the belt sequentially passes through the pulley, the guide pulley system, the generator, and the compressor.

19. The all-terrain vehicle according to claim 18, wherein, a portion of the belt between the guide pulley system and the generator is defined as a first belt, a portion of the belt between the generator and the compressor is defined as a second belt, an angle between an extension direction of the first belt and an extension direction of the second belt is in the range from 34° to 52°.

20. The all-terrain vehicle according to claim 19, wherein, a portion of the belt between the guide pulley system and the pulley is defined as a third belt, a portion of the belt between the compressor and the pulley is defined as a fourth belt, an angle between an extension direction of the third belt and an extension direction of the fourth belt is in the range from 120° to 182°.

21. The all-terrain vehicle according to claim 1, wherein, the frame comprises an upper connecting frame and a lower support frame, the upper connecting frame is detachably connected to above the lower support frame; the upper connecting frame comprises a front roof bar connecting tube, a left connecting tube, and a right connecting tube, the left connecting tube and the right connecting tube are distributed along the width direction of the all-terrain vehicle, the front roof bar connecting tube extends along the width direction of the all-terrain vehicle and is located between the left connecting tube and the right connecting tube; wherein reinforcing plates are fixedly connected to both the left connecting tube and the right connecting tube, the reinforcing plates are arranged around an end portion of the front roof bar connecting tube and define a connecting space, the front roof bar connecting tube are at least partially located in the connecting space and connected to the reinforcing plate, the front roof bar connecting tube is connected to the left connecting tube and the right connecting tube by the reinforcing plates.

22. The all-terrain vehicle according to claim 21, wherein, the reinforcing plate comprise a front reinforcing plate, a rear reinforcing plate, and an upper reinforcing plate, the front reinforcing plate and the rear reinforcing plate are located on two sides of the front roof bar connecting tube along the length direction of the all-terrain vehicle, the front roof bar connecting tube is connected to the front reinforcing plate and the rear reinforcing plate; the upper reinforcing plate is substantially located above the front reinforcing plate, the rear reinforcing plate, and the upper reinforcing plate; and the upper reinforcing plate is connected to the front reinforcing plate and the rear reinforcing plate.

23. The all-terrain vehicle according to claim 22, wherein, two ends of the front roof bar connecting tube are each provided with a first connecting hole and a second connecting hole, the first connecting hole and the second connecting hole are distributed along an axial direction of the front roof bar connecting tube, the front reinforcing plate and the rear reinforcing plate are each provided with a third connecting hole corresponding to the first connecting hole, and the front reinforcing plate and the rear reinforcing plate are each provided with a fourth connecting hole corresponding to the second connecting hole, the first connecting hole and the third connecting hole are connected by a fastener, and the second connecting hole and the fourth connecting hole are also connected by a fastener.

24. The all-terrain vehicle according to claim 23, wherein, a bushing is disposed in each of the first connecting hole and the second connecting hole, the bushing is fixedly connected to the front roof bar connecting tube, the fastener passes through the bushing and then is connected to the front reinforcing plate and the rear reinforcing plate.

25. The all-terrain vehicle according to claim 24, wherein, an end of the upper reinforcing plate away from the rear reinforcing plate at least partially extends toward a lower side of the all-terrain vehicle to form a reinforcing portion, and when viewed along the front-rear direction of the all-terrain vehicle, the reinforcing portion at least partially overlaps with the front reinforcing plate and the rear reinforcing plate.

26. The all-terrain vehicle according to claim 1, wherein, the frame comprises a vehicle body support frame and a seat bracket, the seat bracket is detachably connected to the vehicle body support frame, the seat is located above the seat bracket and detachably connected to the seat bracket and the vehicle body support frame; wherein the seat bracket comprises a transverse connecting tube, a longitudinal connecting tube, and a height support tube, a front end of the longitudinal connecting tube and an upper end of the height support tube are both connected to the transverse connecting tube, a rear end of the longitudinal connecting tube and a lower end of the height support tube are both connected to the vehicle body support frame.

27. The all-terrain vehicle according to claim 26, wherein, the transverse connecting tube extends along the width direction of the all-terrain vehicle, the longitudinal connecting tubes extend along the length direction of the all-terrain vehicle and are distributed along the width direction of the all-terrain vehicle, the height support tubes extend along the height direction of the all-terrain vehicle and are distributed along the width direction of the all-terrain vehicle.

28. The all-terrain vehicle according to claim 27, wherein, the vehicle body support frame comprises a seat connecting tube extends along the width direction of the all-terrain vehicle, the seat connecting tube is located behind the transverse connecting tube, the rear end of the longitudinal connecting tube is detachably connected to the seat connecting tube, the seat is at least partially located above the seat connecting tube and connected to the seat connecting tube.

29. The all-terrain vehicle according to claim 28, wherein, the seat connecting tube is provided with a seat connecting portion, a longitudinal connecting portion is arranged on the rear end of the longitudinal connecting tube, the longitudinal connecting portion is at least partially snap-fitted into the seat connecting portion, the seat connecting portion and the longitudinal connecting portion are detachably connected by a fastener.

30. The all-terrain vehicle according to claim 29, wherein, the vehicle body support frame further comprises a bottom support frame located below the seat bracket, the lower end of the height support tube abuts against the bottom support frame and is detachably connected to the bottom support frame.

31. The all-terrain vehicle according to claim 1, wherein, the frame comprises a rear support frame and a rotating bracket located at a rear portion of the frame, the rotating bracket is at least partially located above the rear support frame and rotatably connected to the rear support frame; the power system comprises a hydraulic device, one end of the hydraulic device is rotatably connected to the rotating bracket, the other end of the hydraulic device is rotatably connected to the rear support frame, the rotating bracket has a first state and a second state, the hydraulic device is capable of pushing the rotating bracket to switch between the first state and the second state.

32. The all-terrain vehicle according to claim 31, wherein, the all-terrain vehicle comprises a cargo box, the cargo box is fixedly connected above the rotating bracket, the cargo box is capable of rotating with the rotating bracket.

33. The all-terrain vehicle according to claim 32, wherein, the hydraulic device comprises a driving member and a telescopic member, the driving member is connected to the telescopic member in a transmission mode, the driving member is capable of controlling the length of the telescopic member.

34. The all-terrain vehicle according to claim 33, wherein, the driving member is further provided with a drive control portion, the drive control portion is electrically connected to an electrical system, the electrical system controls the operation of the drive control portion.

35. The all-terrain vehicle according to claim 34, wherein, the rear support frame is provided with a support fixing portion, the telescopic member comprising a first rotating portion, the first rotating portion is rotatably connected to the support fixing portion.

36. The all-terrain vehicle according to claim 35, wherein, the rotating bracket is provided with a bracket fixing portion, a second rotating portion is arranged on an end of the telescopic member away from the support fixing portion, the second rotating portion is rotatably connected to the bracket fixing portion.

37. The all-terrain vehicle according to claim 1, wherein, the all-terrain vehicle further comprises:
an electrical system, the electrical system being supported by the frame and connected to the power system;
a hydraulic device, the hydraulic device being supported by the frame and electrically connected to the electrical system;
a vehicle lock device, the vehicle lock device being supported by the frame and being connected to the hydraulic device in a transmission mode;
a cargo box, the cargo box being at least partially arranged on the frame;
the frame comprises a rear support frame and a rotating bracket located at a rear portion of the all-terrain vehicle, the rotating bracket is at least partially located above the rear support frame and rotatably connected to the rear support frame, the cargo box is connected to the rotating bracket and supported by the rear support frame, the rear support frame and the rotating bracket is locked by the vehicle lock device; the vehicle lock device comprises a pushing member in connection with the hydraulic device, the pushing member has a telescopic function, the hydraulic device is capable of opening or closing the vehicle lock device by adjusting the length of the pushing member.

38. The all-terrain vehicle according to claim 37, wherein, the hydraulic device is located below the cargo box, one end of the hydraulic device is rotatedly connected to the rear support frame and another end of the hydraulic device is rotatedly connected to the rotating bracket, the rotating bracket has a first state and a second state, the hydraulic device is capable of pushing the rotating bracket to switch between the first state and the second state; the vehicle lock device comprises a latching member and a positioning member, the pushing member is capable of driving the latching member to engage with or disengage from the positioning member; when the latching member engages with the positioning member, the rotating bracket is in the first state; when the latching member disengages from the positioning member, the rotating bracket is in the second state.

39. The all-terrain vehicle according to claim 38, wherein, the vehicle lock device further comprises a hydraulic tube, the hydraulic device comprises a driving member, the driving member is in connection with the pushing member by the hydraulic tube, the driving member is capable of controlling the length of the pushing member, the pushing member is connected to the latching member in a transmission mode, the pushing member is capable of pushing the latching member to rotate.

40. The all-terrain vehicle according to claim 39, wherein, the vehicle lock device further comprises a latching shaft and a latching torsion spring, the latching member and the latching torsion spring are both sleeved on the latching shaft, the latching torsion spring is at least partially snap-fitted on the latching member, the latching member has an open state and a closed state, the pushing member pushes the latching member into the open state, the latching torsion spring pushes the latching member into the closed state.

41. An all-terrain vehicle, comprising:
a frame, a rear accommodating space being defined by a rear portion of the frame;
a vehicle body cover, the vehicle body cover being connected to the frame and defining a cockpit;
a travel system, the travel system being at least partially located below the frame;
a power system, the power system being supported by the frame and at least partially located in the rear accommodating space, the power system comprising an engine, an air filter, and an air intake duct, the engine being connected to the air filter, the air intake duct being connected to the air filter;
a transmission system, the transmission system being at least partially located in the rear accommodating space, the transmission system comprising a transmission case, a gear transmission mechanism located in the transmission case, and a continuously variable transmission connected to the gear transmission mechanism in a transmission mode, the gear transmission mechanism being connected to the travel system, the continuously variable transmission being connected to the engine in a transmission mode;
a seat, the seat being at least partially located in front of the rear accommodating space, the seat comprising backrest;
an air conditioning system, the air conditioning system being at least partially disposed on the frame;
an instrument panel, the instrument panel being supported by the frame and located in the cockpit;
wherein,
the air filter is located below the seat, when viewed along a front-rear direction of the all-terrain vehicle, the engine at least partially overlaps the transmission case, the engine and the transmission case are both located behind the seat, the air intake duct at least partially overlaps the backrest, and when viewed along a left-right direction of the all-terrain vehicle, the engine at least partially overlaps the continuously variable transmission, and the transmission case at least partially overlaps the continuously variable transmission;
the air conditioning system comprises a housing, a temperature adjustment device, and a blower device, the housing is located below the instrument panel, the housing defines an air inlet and an air outlet located above the air inlet, the air inlet and the air outlet both communicates the housing with the cockpit; the temperature adjustment device is configured to heat or cool air, the temperature adjustment device being at least partially disposed in the housing, and along a height direction of the all-terrain vehicle, the temperature adjustment device being located between the air inlet and the air outlet; the blower device is disposed in the housing, and along the height direction of the all-terrain vehicle, the blower device is located between the air outlet and the temperature adjustment device.

42. The all-terrain vehicle according to claim 41, wherein, along a length direction of the all-terrain vehicle, the engine is located between the transmission case and the seat.

43. The all-terrain vehicle according to claim 41, wherein, the all-terrain vehicle further comprises a cargo box, the cargo box is located above the rear accommodating space, and along the length direction of the all-terrain vehicle, the air intake duct is at least partially located between the cargo box and the backrest; along the width direction of the all-terrain vehicle, the air intake duct and the air filter are located on the same side of the engine.

44. The all-terrain vehicle according to claim 41, wherein, the all-terrain vehicle further comprises a side intake mechanism and an wind intake duct, the wind intake duct respectively communicates with the continuously variable transmission and the side intake mechanism, the side intake mechanism is exposed to the exterior of the all-terrain vehicle and communicates with the outside; the power system comprises an outlet pipe and an exhaust pipe, the outlet pipe communicates with the continuously variable transmission, the exhaust pipe is connected to the engine, an outlet opening of the outlet pipe is oriented toward the engine and the exhaust pipe.

45. The all-terrain vehicle according to claim 41, wherein, the power system further comprises an exhaust pipe and a muffler, the exhaust pipe is connected to both the muffler and the engine, and along the height direction of the all-terrain vehicle, the exhaust pipe at least partially overlaps the transmission case; and the exhaust pipe is located above the transmission case.

46. The all-terrain vehicle according to claim 41, wherein, the engine further comprises a magneto and a crankshaft, the magneto is connected to the crankshaft in a transmission mode, the crankshaft is connected to the continuously variable transmission in a transmission mode, and along the width direction of the all-terrain vehicle, the magneto and the continuously variable transmission are respectively located on two sides of the crankshaft.

47. The all-terrain vehicle according to claim 46, wherein, the engine further comprises a generator, the generator is connected to the crankshaft in a transmission mode, the generator and the magneto are located on the same side of the crankshaft; the generator is located above the magneto and the crankshaft.

48. The all-terrain vehicle according to claim 47, wherein, the all-terrain vehicle further comprises a compressor, the compressor is connected to the crankshaft in a transmission mode, the compressor is connected to the generator in a transmission mode, the compressor, the generator, and the magneto are located on the same side of the crankshaft; the compressor is located behind the magneto.

49. The all-terrain vehicle according to claim 48, wherein, the axis of the magneto, the axis of the generator, and the axis of the compressor each extend substantially along the width direction of the all-terrain vehicle, a longitudinal plane is defined as a plane perpendicular to the width direction of the all-terrain vehicle, a projection of the axis of the magneto onto the longitudinal plane along the width direction is defined as a magneto projection point, a projection of the axis of the generator onto the longitudinal plane along the width direction is defined as a generator projection point, a projection of the axis of the compressor onto the longitudinal plane along the width direction is defined as a compressor projection point, a line connecting the magneto projection point and the generator projection point is defined as a first connecting line, a line connecting the generator projection point and the compressor projection point is defined as a second connecting line, an angle between the first connecting line and the second connecting line is in the range from 43° to 65°.

50. The all-terrain vehicle according to claim 49, wherein, a line connecting the compressor projection point and the magneto projection point is defined as a third connecting line, an angle between the third connecting line and the first connecting line is in the range from 34° to 52°.

51. The all-terrain vehicle according to claim 41, wherein, the all-terrain vehicle comprises a cooling mechanism supported by the frame, the temperature adjustment device comprises an expansion valve, an evaporator, and a compressor, the expansion valve is connected to the housing and located outside the housing, the evaporator is located in the housing, the evaporator is connected to both the expansion valve and the compressor, the cooling mechanism is connected to both the compressor and the expansion valve.

52. The all-terrain vehicle according to claim 51, wherein, along the height direction of the all-terrain vehicle, the evaporator is located between the air inlet and the blower device.

53. The all-terrain vehicle according to claim 52, wherein, the temperature adjustment device comprises a heating component, the heating component is disposed in the housing, and along the height direction of the all-terrain vehicle, the heating component is located between the blower device and the evaporator.

54. The all-terrain vehicle according to claim 51, wherein, the cooling mechanism comprises a condenser, a radiator, and a receiver drier, the condenser is located in front of the radiator and connected to the radiator, the receiver drier is fixed to the radiator and the condenser, the condenser is connected to both the compressor and the receiver drier, the receiver drier is further connected to the expansion valve.

55. The all-terrain vehicle according to claim 54, wherein, the receiver drier is at least partially located in front of the radiator.

56. The all-terrain vehicle according to claim 54, wherein, the receiver drier is welded to the condenser, and the receiver drier is connected to the radiator by a bolt.

57. The all-terrain vehicle according to claim 56, wherein, the radiator at least partially extends outward from itself to form a cylindrical portion, the receiver drier is provided with a connecting member, the connecting member is connected to the cylindrical portion by a bolt.

58. The all-terrain vehicle according to claim 54, wherein, a ratio of a length of the receiver drier along the height direction of the all-terrain vehicle to a length of the condenser along the height direction of the all-terrain vehicle is in the range from 0.4 to 0.62.

59. The all-terrain vehicle according to claim 58, wherein, a volume of the receiver drier is in the range from 68 ml to 102 ml.

60. The all-terrain vehicle according to claim 41, wherein, the all-terrain vehicle further comprises a suspension system, the suspension system comprising a front swing arm and a front torsion bar, the front swing arm is located in front of the frame and rotatably connected to the frame, the front torsion bar is rotatably connected to the frame and the front swing arm; wherein the front swing arm comprise a front upper swing arm and a front lower swing arm disposed along the height direction of the all-terrain vehicle, the front torsion bar is located between the front upper swing arm and the front lower swing arm, and the front torsion bar is connected to the front upper swing arm.

61. The all-terrain vehicle according to claim 60, wherein, the frame comprises an integrated frame located at a front portion thereof, the front swing arm and the front torsion bar are rotatably connected to the integrated frame; when viewed along the height direction of the all-terrain vehicle, the front torsion bar is substantially U-shaped, and the front torsion bar at least partially surrounds the integrated frame.

62. The all-terrain vehicle according to claim 61, wherein, at least two positioning rotating members are sleeved on the front torsion bar, the positioning rotating members are disposed along the width direction of the all-terrain vehicle and fixedly connected to the integrated frame, the front torsion bar is rotatably connected to the positioning rotating members.

63. The all-terrain vehicle according to claim 62, wherein, an integrated connecting portion is arranged on the front side of the integrated frame, the positioning rotating member is provided with a positioning connecting portion corresponding to the integrated connecting portion, the positioning connecting portion is detachably connected to the integrated connecting portion by a fastener.

64. The all-terrain vehicle according to claim 63, wherein, along the width direction of the all-terrain vehicle, the front upper swing arm is rotatably connected to two sides of the integrated frame, an arm connecting portion is arranged on a lower end of the front upper swing arm, two ends of the front torsion bar are rotatably connected to the arm connecting portions.

65. The all-terrain vehicle according to claim 41, wherein, the all-terrain vehicle further comprises a suspension system, the suspension system comprising a rear swing arm, a rear torsion bar, and a rear shock absorber located at a rear portion of the frame, the rear swing arm, the rear torsion bar, and the rear shock absorber are all rotatably connected to the frame; wherein the rear swing arm is provided with an arm mounting plate, and the rear torsion bar and the rear shock absorber are both rotatably connected to the arm mounting plate.

66. The all-terrain vehicle according to claim 65, wherein, the rear swing arm comprises a rear upper swing arm and a rear lower swing arm disposed along the height direction of the all-terrain vehicle, the arm mounting plate is located between the rear upper swing arm and the rear lower swing arm and fixedly connected to the rear lower swing arm.

67. The all-terrain vehicle according to claim 66, wherein, the arm mounting plate extends substantially along the width direction of the all-terrain vehicle, an end of the arm mounting plate away from the frame is provided with an arm mounting portion, a lower end of the rear shock absorber is provided with a shock mounting portion, the arm mounting portion is rotatably connected to the shock mounting portion.

68. The all-terrain vehicle according to claim 67, wherein, when viewed along the height direction of the all-terrain vehicle, the rear torsion bar is substantially U-shaped, the rear torsion bar is at least partially located between the rear upper swing arm and the rear lower swing arm, and the rear torsion bar at least partially surrounds the frame.

69. The all-terrain vehicle according to claim 68, wherein, a rotating mounting portion is arranged on an end of the arm mounting plate close to the frame, torsion connecting rods are arranged on both two ends of the rear torsion bar, one end of the torsion connecting rod is rotatably connected to the rear torsion bar, the other end of the torsion connecting rod is rotatably connected to the rotating mounting portion.

70. The all-terrain vehicle according to claim 69, wherein, the rear shock absorbers are located on two sides of the frame along the width direction of the all-terrain vehicle, the upper end of the rear shock absorber is connected to the frame, the lower end of the rear shock absorber is connected to the rear lower swing arm, and the rear torsion bar and the torsion connecting rod are located between the rear shock absorbers.

71. The all-terrain vehicle according to claim 70, wherein, at least two installation rotating members are sleeved on the rear torsion bar, the installation rotating member are distributed along the width direction of the all-terrain vehicle and fixedly connected to the frame, the rear torsion bar is rotatably connected to the installation rotating member.

72. The all-terrain vehicle according to claim 71, wherein, a torsion bar connecting portion is arranged on a rear side of the frame, the installation rotating member is provided with an installation connecting portion corresponding to the torsion bar connecting portion, the installation connecting portion is detachably connected to the torsion bar connecting portion by a fastener.

73. The all-terrain vehicle according to claim 72, wherein, the suspension system further comprises a reinforcing bracket plate, the reinforcing bracket plate at least partially surrounds the rear swing arm and fixedly connected to the rear swing arm.

74. The all-terrain vehicle according to claim 73, wherein, the reinforcing bracket plate is U-shaped, and the reinforcing bracket plate is located below the rear lower swing arm and fixedly connected to the rear lower swing arm.

75. An all-terrain vehicle, comprising:
a frame, a rear accommodating space being defined by a rear portion of the frame;
a travel system, the travel system being at least partially located below the frame;
a power system, the power system being supported by the frame and at least partially located in the rear accommodating space, the power system comprising an engine, an air filter, and an air intake duct, the engine being connected to the air filter, the air intake duct being connected to the air filter;
a transmission system, the transmission system being at least partially located in the rear accommodating space, the transmission system comprising a transmission case, a gear transmission mechanism located in the transmission case, and a continuously variable transmission connected to the gear transmission mechanism in a transmission mode, the gear transmission mechanism being connected to the travel system in a transmission mode, the continuously variable transmission is connected to the engine in a transmission mode;
a seat, the seat being at least partially located in front of the rear accommodating space, the seat comprising a backrest;
a brake system, the brake system comprising a caliper configured to brake the travel system and a drive motor driving the caliper;
an electrical system, the electrical system being at least partially disposed on the frame;
a cargo box, the cargo box being at least partially disposed on the frame and located at a rear portion of the frame;
wherein,
the air filter is located below the seat, when viewed along a front-rear direction of the all-terrain vehicle, the engine at least partially overlaps the transmission case, the engine and the transmission case are both located behind the seat, the air intake duct at least partially overlaps the backrest, and when viewed along a left-right direction of the all-terrain vehicle, the engine at least partially overlaps the continuously variable transmission, and the transmission case at least partially overlaps the continuously variable transmission;
the electrical system comprises an electronic parking brake controller and a parking switch, the parking switch is electrically connected to the electronic parking brake controller, the electronic parking brake controller is electrically connected to the drive motor, the electronic parking brake controller is configured to control, the drive motor to drive the caliper to brake the travel system in response to operation of the parking switch,, the parking switch is located in the cockpit, the electronic parking brake controller is located on the seat or the cargo box.

76. The all-terrain vehicle according to claim 75, wherein, along the length direction of the all-terrain vehicle, the engine is located between the transmission case and the seat.

77. The all-terrain vehicle according to claim 75, wherein, the all-terrain vehicle further comprises a cargo box, the cargo box is located above the rear accommodating space, and along the length direction of the all-terrain vehicle, the air intake duct is at least partially located between the cargo box and the backrest; along the width direction of the all-terrain vehicle, the air intake duct and the air filter are located on the same side of the engine.

78. The all-terrain vehicle according to claim 75, wherein, the all-terrain vehicle further comprises a side intake mechanism and an wind intake duct, the wind intake duct communicates with both the continuously variable transmission and the side intake mechanism, the side intake mechanism is exposed to the exterior of the all-terrain vehicle and communicates with the outside; the power system comprises an outlet pipe and an exhaust pipe, the outlet pipe communicates with the continuously variable transmission, the exhaust pipe is connected to the engine, an outlet opening of the outlet pipe is oriented toward the engine and the exhaust pipe.

79. The all-terrain vehicle according to claim 75, wherein, the power system further comprises an exhaust pipe and a muffler, the exhaust pipe is connected to both the muffler and the engine, and along the height direction of the all-terrain vehicle, the exhaust pipe at least partially overlaps the transmission case; the exhaust pipe is located above the transmission case.

80. The all-terrain vehicle according to claim 75, wherein, the engine further comprises a magneto and a crankshaft, the magneto is connected to the crankshaft in a transmission mode, the crankshaft is connected to the continuously variable transmission in a transmission mode, and along the width direction of the all-terrain vehicle, the magneto and the continuously variable transmission are respectively located on two sides of the crankshaft.

81. The all-terrain vehicle according to claim 80, wherein, the engine further comprises a generator, the generator is connected to the crankshaft in a transmission mode, the generator and the magneto are located on the same side of the crankshaft; the generator is located above the magneto and the crankshaft.

82. The all-terrain vehicle according to claim 81, wherein, the all-terrain vehicle further comprises a compressor, the compressor is connected to the crankshaft in a transmission mode, the compressor is connected to the generator in a transmission mode, the compressor, the generator, and the magneto are located on the same side of the crankshaft; the compressor is located behind the magneto.

83. The all-terrain vehicle according to claim 82, wherein, the axis of the magneto, the axis of the generator, and the axis of the compressor each extend substantially along the width direction of the all-terrain vehicle, a longitudinal plane is defined as a plane perpendicular to the width direction of the all-terrain vehicle, a projection of the axis of the magneto onto the longitudinal plane along the width direction is defined as a magneto projection point, a projection of the axis of the generator onto the longitudinal plane along the width direction is defined as a generator projection point, a projection of the axis of the compressor onto the longitudinal plane along the width direction is defined as a compressor projection point, a line connecting the magneto projection point and the generator projection point is defined as a first connecting line, a line connecting the generator projection point and the compressor projection point is defined as a second connecting line, an angle between the first connecting line and the second connecting line is in the range from 43° to 65°.

84. The all-terrain vehicle according to claim 83, wherein, a line connecting the compressor projection point and the magneto projection point is defined as a third connecting line, an angle between the third connecting line and the first connecting line is in the range from 34° to 52°.

85. The all-terrain vehicle according to claim 75, wherein, the seat comprises a driver seat and a passenger seat disposed along the width direction of the all-terrain vehicle, the electronic parking brake controller is located between the driver seat and the passenger seat.

86. The all-terrain vehicle according to claim 85, wherein, the seat further comprises an accommodating portion, and along the width direction of the all-terrain vehicle, the accommodating portion is located between the driver seat and the passenger seat, the electronic parking brake controller is located in the accommodating portion.

87. The all-terrain vehicle according to claim 86, wherein, the accommodating portion at least partially recesses downward to define an accommodating cavity, the electronic parking brake controller is located in the accommodating cavity; the electronic parking brake controller is fixedly connected to the bottom of the accommodating cavity.

88. The all-terrain vehicle according to claim 87, wherein, the seat further comprises a maintenance cover plate, the maintenance cover plate covers the accommodating cavity and is connected to the accommodating portion, the maintenance cover plate and the accommodating portion cooperatively define a seat accommodating space for accommodating the electronic parking brake controller.

89. The all-terrain vehicle according to claim 88, wherein, the accommodating portion is provided with a snap-fit portion and a fixing portion, the snap-fit portion and the fixing portion are arranged around the accommodating cavity, one side of the maintenance cover plate is snap-fitted with the snap-fit portion, the other side of the maintenance cover plate away from the snap-fit portion is connected to the fixing portion by bolts.

90. The all-terrain vehicle according to claim 85, wherein, the driver seat comprises a first cushion, the passenger seat comprises a second cushion, and the electronic parking brake controller is connected below the first cushion or below the second cushion.

91. The all-terrain vehicle according to claim 75, wherein, a lower side of the seat defines a layout space, and the electronic parking brake controller is located in the layout space.

92. The all-terrain vehicle according to claim 75, wherein, the cargo box comprises a bottom plate and a plurality of side plates, the plurality of side plates are located above the bottom plate and around the bottom plate, the electronic parking brake controller is connected to the side plates, or the electronic parking brake controller is connected to the lower side of the bottom plate.

93. The all-terrain vehicle according to claim 75, wherein, the travel system comprises a rear wheel located at a rear portion of the frame, the brake system comprises a caliper for braking the rear wheel and a drive motor driving the caliper, the electronic parking brake controller is electrically connected to the drive motor; a minimum distance between the Electronic parking brake controller and the drive motor is in the range from 440 mm to 660 mm.

94. An all-terrain vehicle, comprising:
a frame, a rear accommodating space being defined by a rear portion of the frame;
a travel system, the travel system being at least partially located below the frame;
a power system, the power system being supported by the frame and at least partially located in the rear accommodating space, the power system comprising an engine, an air filter, and an air intake duct, the engine being connected to the air filter, the air intake duct being connected to the air filter;
a transmission system, the transmission system being at least partially located in the rear accommodating space, the transmission system comprising a transmission case, a gear transmission mechanism located in the transmission case, and a continuously variable transmission connected to the gear transmission mechanism in a transmission mode, the gear transmission mechanism being connected to the travel system in a transmission mode, the continuously variable transmission being connected to the engine in a transmission mode;
a seat, the seat being at least partially located in front of the rear accommodating space, the seat comprising a backrest;
an electrical system, the electrical system being electrically connected to the transmission system;
wherein,
the air filter is located below the seat, when viewed along a front-rear direction of the all-terrain vehicle, the engine at least partially overlaps the transmission case, the engine and the transmission case are both located behind the seat, the air intake duct at least partially overlaps the backrest, and when viewed along a left-right direction of the all-terrain vehicle, the engine at least partially overlaps the continuously variable transmission, and the transmission case at least partially overlaps the continuously variable transmission;
the electrical system comprises a gear shift switch installed in a driving space, the gear shift switch is electrically connected to the transmission system; wherein the gear shift switch comprises a circuit control board, a connecting housing, a rear housing, and a sealing gasket, the rear housing defines a circuit space, the circuit control board is located in the circuit space, the sealing gasket is attached to the circuit control board and sealing the circuit control board in the circuit space, the connecting housing is connected to the rear housing, the sealing gasket seals between the connecting housing and the rear housing and is snap-fitted with the rear housing.

95. The all-terrain vehicle according to claim 94, wherein, along a length direction of the all-terrain vehicle, the engine is located between the transmission case and the seat.

96. The all-terrain vehicle according to claim 94, wherein, the all-terrain vehicle further comprises a cargo box, the cargo box is located above the rear accommodating space, and along the length direction of the all-terrain vehicle, the air intake duct is at least partially located between the cargo box and the backrest; along a width direction of the all-terrain vehicle, the air intake duct and the air filter are located on the same side of the engine.

97. The all-terrain vehicle according to claim 94, wherein, the all-terrain vehicle further comprises a side intake mechanism and an wind intake duct, the wind intake duct respectively communicates with the continuously variable transmission and the side intake mechanism, the side intake mechanism is exposed to the exterior of the all-terrain vehicle and communicates with the outside; the power system comprises an outlet pipe and an exhaust pipe, the outlet pipe communicates with the continuously variable transmission, the exhaust pipe is connected to the engine, an outlet opening of the outlet pipe is oriented toward the engine and the exhaust pipe.

98. The all-terrain vehicle according to claim 94, wherein, the power system further comprises an exhaust pipe and a muffler, the exhaust pipe is respectively connecting the muffler and the engine, and along a height direction of the all-terrain vehicle, the exhaust pipe at least partially overlaps the transmission case; the exhaust pipe is located above the transmission case.

99. The all-terrain vehicle according to claim 94, wherein, the engine further comprises a magneto and a crankshaft, the magneto is connected to the crankshaft in a transmission mode, the crankshaft is connected to the continuously variable transmission in a transmission mode, and along the width direction of the all-terrain vehicle, the magneto and the continuously variable transmission are respectively located on two sides of the crankshaft.

100. The all-terrain vehicle according to claim 99, wherein, the engine further comprises a generator, the generator is connected to the crankshaft in a transmission mode, the generator and the magneto are located on the same side of the crankshaft; the generator is located above the magneto and the crankshaft.

101. The all-terrain vehicle according to claim 100, wherein, the all-terrain vehicle further comprises a compressor, the compressor is connected to the crankshaft in a transmission mode, the compressor is connected to the generator in a transmission mode, the compressor, the generator, and the magneto are located on the same side of the crankshaft; the compressor is located behind the magneto.

102. The all-terrain vehicle according to claim 101, wherein, the axis of the magneto, the axis of the generator, and the axis of the compressor each extend substantially along the width direction of the all-terrain vehicle, a longitudinal plane is defined as a plane perpendicular to the width direction of the all-terrain vehicle, a projection of the axis of the magneto onto the longitudinal plane along the width direction is defined as a magneto projection point, a projection of the axis of the generator onto the longitudinal plane along the width direction is defined as a generator projection point, a projection of the axis of the compressor onto the longitudinal plane along the width direction is defined as a compressor projection point, a line connecting the magneto projection point and the generator projection point is defined as a first connecting line, a line connecting the generator projection point and the compressor projection point is defined as a second connecting line, an angle between the first connecting line and the second connecting line is in the range from 43° to 65°.

103. The all-terrain vehicle according to claim 102, wherein, a line connecting the compressor projection point and the magneto projection point is defined as a third connecting line, an angle between the third connecting line and the first connecting line is in the range from 34° to 52°.

104. The all-terrain vehicle according to claim 94, wherein, the rear housing is provided with a circuit snap-fit portion and a sealing snap-fit portion, the circuit control board is snap-fitted with the circuit snap-fit portion, the sealing gasket is snap-fitted with the sealing snap-fit portion.

105. The all-terrain vehicle according to claim 104, wherein, a preset straight line is defined as a straight line perpendicular to both the circuit control board and the sealing gasket, when viewed along the preset straight line, the sealing snap-fit portion substantially surrounds the circuit snap-fit portion.

106. The all-terrain vehicle according to claim 105, wherein, the circuit control board defines a circuit fixing hole, the rear housing defines a housing fixing hole corresponding to the circuit fixing hole, an axis of the circuit fixing hole and an axis of the housing fixing hole are substantially perpendicular to the preset straight line, the circuit fixing hole and the housing fixing hole are connected by a fastener, so that the circuit control board is connected to the rear housing.

107. The all-terrain vehicle according to claim 94, wherein, a plurality of upper connecting portions are arranged at an outer edge of the connecting housing, an a plurality of lower connecting portions corresponding to the upper connecting portions are arranged at outer edge of the rear housing is provided with, the upper connecting portions and the lower connecting portions are detachably connected by fasteners.

108. The all-terrain vehicle according to claim 94, wherein, the gear shift switch further comprises a gear shift cover, a first snap-fit portion is arranged at an outer edge of the gear shift cover close to the connecting housing, the connecting housing is provided with a second snap-fit portion corresponding to the first snap-fit portion, the first snap-fit portion is snap-fitted with the second snap-fit portion, so that the gear shift cover is detachably connected to the connecting housing.

109. The all-terrain vehicle according to claim 106, wherein, the connecting housing defines a button hole, the button hole extends along the preset straight line, a button block is disposed in the button hole, the circuit control board is provided with a button contact, one end of the button block abutting against the button contact.

110. The all-terrain vehicle according to claim 94, wherein, a plurality of gear shift buttons are arranged at an end face of the gear shift cover away from the connecting housing, the gear shift buttons are provided with a display portion, and after pressing the gear shift button, the display portion is capable of displaying a gear signal.

111. The all-terrain vehicle according to claim 94, wherein, a vehicle body cover comprises a center control panel located in the driving space, the center control panel is provided with a connection limiting portion, the connecting housing is provided with a fixed connecting portion corresponding to the connection limiting portion, the connection limiting portion is connected to the fixed connecting portion, so that the gear shift switch is connected to the vehicle body cover.

112. The all-terrain vehicle according to claim 94, wherein, the electrical system comprises a drive switch and a vehicle body controller located in the driving space, the drive switch is electrically connected to the vehicle body controller; the drive switch comprises a knob, a connecting base, a drive rotating member, and a drive fixing member, the connecting base is substantially hollow cylindrical, the knob is at least partially located in the connecting base and rotatably connected to the connecting base, the drive rotating member and the drive fixing member are both located in the connecting base, the drive rotating member is connected to the knob, the drive fixing member is connected to the connecting base; the drive switch comprises a four-wheel drive gear position, and when the drive switch is in the four-wheel drive gear position, the drive rotating member abuts against the drive fixing member in a rotation direction of the knob to limit rotation of the knob.

113. The all-terrain vehicle according to claim 112, wherein, the drive rotating member comprises a four-wheel drive rotating portion, the drive fixing member comprises a four-wheel drive snap-fit portion, and when the drive switch is in the four-wheel drive gear position, the four-wheel drive rotating portion abuts against the four-wheel drive snap-fit portion.

114. The all-terrain vehicle according to claim 113, wherein, the drive switch further comprises a two-wheel drive gear position, the drive rotating member comprises a two-wheel drive rotating portion, the drive fixing member comprises a two-wheel drive snap-fit portion, and when the drive switch is in the two-wheel drive gear position, the two-wheel drive rotating portion abuts against the two-wheel drive snap-fit portion.

115. The all-terrain vehicle according to claim 114, wherein, the drive switch further comprises a four-wheel drive lock gear position for limiting rotation of the travel system, the drive rotating member comprises a lock abutting portion, the drive fixing member comprises a lock snap-fit portion, and when the drive switch is in the four-wheel drive lock gear position, the lock abutting portion abuts against the lock snap-fit portion.

116. The all-terrain vehicle according to claim 115, wherein, the knob is capable of driving the drive rotating member to move along an axial direction of the connecting base, and when the drive switch is in the four-wheel drive gear position, the knob is pressed to separate the four-wheel drive rotating portion from the four-wheel drive snap-fit portion, and when pressing of the knob is stopped, the four-wheel drive rotating portion abuts against the four-wheel drive snap-fit portion again.

117. The all-terrain vehicle according to claim 94, wherein, the electrical system comprises an instrument switch located in the driving space, the instrument switch comprises a housing, a circuit board, a sealing gasket, and a gear set, the circuit board, the sealing gasket, and the gear set are all located in the housing;
the circuit board is provided with a photoelectric switch, the sealing gasket covers the circuit board and the photoelectric switch, the gear set is located on the side of the sealing gasket away from the circuit board, the gear set is rotatably connected to the housing, and during rotation, the gear set is capable of blocking a light beam of the photoelectric switch and controlling the photoelectric switch to perform signal transmission.

118. The all-terrain vehicle according to claim 117, wherein, the photoelectric switch is U-shaped, the photoelectric switch comprises an emitter and a receiver, the emitter and the receiver are disposed opposite to each other, a light beam of the emitter is transmitted to the receiver, the gear set is at least partially located between the emitter and the receiver, the gear set is capable of blocking the light beam of the emitter.

119. The all-terrain vehicle according to claim 94, wherein, the all-terrain vehicle further comprises:
a windshield mechanism, the windshield mechanism being at least partially connected to the frame;
a sealing structure sealing structure being at least partially attached to the vehicle body cover;
wherein the vehicle body cover comprises a door rotatably connected to the frame and a top roof fixedly connected to the frame, along the width direction of the all-terrain vehicle, the door is located on two sides of the driving space, the top roof is located above the frame; wherein the frame comprises an upper connecting frame located above the driving space, the sealing structure comprises a door sealing strip and a roof sealing strip, the door sealing strip seals between the upper connecting frame and the door, the roof sealing strip seals between the upper connecting frame and the top roof.

120. The all-terrain vehicle according to claim 119, wherein, the upper connecting frame comprises a front roof bar connecting tube extending along the width direction of the all-terrain vehicle, and a left connecting tube and a right connecting tube extending along the length direction of the all-terrain vehicle, the left connecting tube and the right connecting tube are respectively connected to two ends of the front roof bar connecting tube, the door sealing strip and the roof sealing strip both are attached to the left connecting tube and the right connecting tube.

121. The all-terrain vehicle according to claim 120, wherein, the frame further comprises a roof bracket, the roof bracket is connected to the front roof bar connecting tube, two ends of the roof bracket respectively abut against the left connecting tube and the right connecting tube; the sealing structure comprises a connecting tube sealing strip, the connecting tube sealing strip seals between the left connecting tube and the roof bracket, and the connecting tube sealing strip also seals between the right connecting tube and the roof bracket; the top roof is fixedly connected above the roof bracket, and the roof sealing strip also seals between the roof bracket and the top roof.

122. The all-terrain vehicle according to claim 121, wherein, the sealing structure comprises a windshield sealing strip, and along the length direction of the all-terrain vehicle, the windshield sealing strip is located in front of the roof bracket, the windshield sealing strip is attached to the roof bracket; the windshield mechanism comprises a front windshield, the front windshield is located in front of the roof bracket; an upper side of the front windshield is abutting against the windshield sealing strip.

123. The all-terrain vehicle according to claim 94, wherein, the all-terrain vehicle further comprises:
a sealing structure, the sealing structure being at least partially attached to the vehicle body cover;
wherein the frame comprises an upper connecting frame and a roof bracket located above the driving space, the roof bracket is at least partially located above the upper connecting frame and connected to the upper connecting frame; the vehicle body cover comprises a top roof, the roof bracket and the top roof are both made of plastic material, the top roof is connected above the roof bracket, the sealing structure comprises a roof sealing strip, the roof sealing strip seals between the roof bracket and the top roof.

124. The all-terrain vehicle according to claim 123, wherein, the sealing structure comprises a windshield sealing strip, and along the length direction of the all-terrain vehicle, the windshield sealing strip is located in front of the roof bracket, the windshield sealing strip is attached to the roof bracket; the windshield mechanism comprises a front windshield located in front of the roof bracket, an upper side of the front windshield is rotatably connected to the roof bracket, the upper side of the front windshield abuts against the windshield sealing strip.

125. The all-terrain vehicle according to claim 124, wherein, the roof bracket is provided with a rotational connecting member, the rotational connecting member comprises a roof connecting portion and a glass connecting portion, the roof connecting portion is rotatably connected to the glass connecting portion, the roof connecting portion is connected to the roof bracket, the front windshield is connected to the glass connecting portion, so that the front windshield is rotatably connected to the roof bracket by the rotational connecting member.

126. The all-terrain vehicle according to claim 124, wherein, the all-terrain vehicle further comprises an electrical system, the electrical system comprises a switch assembly, the roof bracket at least partially extends toward the driving space to form a switch box, the switch assembly is installed in the switch box.

127. The all-terrain vehicle according to claim 126, wherein, the switch assembly comprises a windshield switch, the windshield switch is disposed in the switch box, a switch connecting member is disposed between the front windshield and the frame, the windshield switch is electrically connected to the switch connecting member, so that the windshield switch is capable of controlling rotation of the front windshield by the switch connecting member.

128. The all-terrain vehicle according to claim 127, wherein, the electrical system further comprises a plurality of electrical components, the roof bracket at least partially extends toward the driving space to form an electrical component box, the electrical components is disposed in the electrical component box.

129. The all-terrain vehicle according to claim 127, wherein, the electrical components comprise a signal transmitter, the signal transmitter is located in the electrical component box.
